(19) Europäisches Patentamt
European Patent Office
Office européen des brevets

(11) EP 4 574 858 A1

(12) EUROPEAN PATENT APPLICATION

(43) Date of publication:
**25.06.2025 Bulletin 2025/26**

(21) Application number: **23307274.3**

(22) Date of filing: **19.12.2023**

(51) International Patent Classification (IPC):
***C08F 290/06*** *(2006.01)* ***C08F 283/10*** *(2006.01)*
***C08F 222/10*** *(2006.01)* ***C08J 5/18*** *(2006.01)*
***C08L 51/08*** *(2006.01)* ***C09D 151/08*** *(2006.01)*

(52) Cooperative Patent Classification (CPC):
**C08F 290/061; C08F 222/102; C08F 222/103; C08F 283/10; C08J 3/28; C08J 5/18; C08L 51/08; C09D 151/08;** B33Y 70/00; C08J 2351/08; C08J 2367/07

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ARKEMA FRANCE**
**92800 Puteaux (FR)**

(72) Inventors:
- **MCGRAIL, Brendan**
**EXTON, 19341 (US)**
- **HE, Yuhong**
**EXTON, 19341 (US)**
- **WRIGHT, Kathryn**
**EXTON, 19341 (US)**
- **REN, Kangtai**
**EXTON, 19341 (US)**
- **GOLDMAN, Trevor**
**BOULDER, 80301 (US)**

(74) Representative: **Arkema Patent**
**Arkema France**
**DRD-DPI**
**51, Esplanade du Général de Gaulle**
**CS 10478**
**92907 Paris La Défense Cedex (FR)**

# (54) CURABLE COMPOSITIONS INCLUDING A POLYESTER (METH)ACRYLATE OLIGOMER

(57) Curable compositions providing a hybrid curing mechanism, combining the ease of actinically-cured resins with improved mechanical properties of the cured product, comprise (A) a free radical polymerizable resin comprising a polyester (meth)acrylate oligomer and a (meth)acrylate monomer; (B) a cationically polymerizable resin; (C) a free radical photoinitiator; and (D) a photoacid generator; wherein the polyester (meth)acrylate oligomer has a glass transition temperature (Tg) of less than 25 °C. Such curable compositions result in cured products having improved mechanical properties, such as toughness, while minimizing the reduction of other desired properties. Such resins are suitable for use as 3D printing resins capable of forming articles made by 3D printing.

EP 4 574 858 A1

## Description

### FIELD

Embodiments of the present disclosure relate to actinically curable compositions and, more specifically to curable compositions capable of undergoing multiple curing mechanisms to provide cured products.

### BACKGROUND

Actinically-cured 3D printing processes have the advantage of improved build quality and minimized layer lines relative to other 3D printing processes, such as fused deposition modelling. However, actinically-cured resins may experience reduced toughness. Conventional methods may use certain strategies to modify a curable composition to improve the toughness of the cured product formed therefrom. However currently available toughening strategies may result in increased cure time, and/or decreased tensile strength.

### SUMMARY

Curable compositions that include both a free radical polymerizable resin and a cationically polymerizable resin may provide a hybrid curing mechanism, combining the ease of actinically-cured resins with improved mechanical properties of the cured product. However, some methods such as the use of polyether or polyester polyols as chain-transfer agents in the cationic polymerizable process may slow the cationic curing process, thereby increasing the time needed to form a cured product and extending print times. Impact modifying particles may also be used to increase toughness. However, the range of compatible monomers of both acrylic and epoxy types is limited by the monomer-particle solubility difference.

Curable compositions that further improve the mechanical properties, such as toughness, while minimizing the reduction of other desired properties are needed. This need can be met by the curable compositions disclosed herein comprising a free radical polymerizable resin that includes a polyester (meth)acrylate oligomer, a cationically polymerizable resin, a free radical photoinitiator, and a photoacid generator.

Exemplary embodiments include a curable composition comprising: (A) a free radical polymerizable resin comprising a polyester (meth)acrylate oligomer and a (meth)acrylate monomer; (B) a cationically polymerizable resin; (C) a free radical photoinitiator; and (D) a photoacid generator; wherein the polyester (meth)acrylate oligomer has a glass transition temperature (Tg) of less than 25 °C.

This summary is provided to introduce a selection of concepts that are further described in the detailed description. This summary is not intended to identify key or essential features of the claimed subject matter, nor is it intended to be used as an aid in limiting the scope of the claimed subject matter.

Additional features and advantages of the described embodiments will be set forth in the detailed description that follows. The additional features and advantages of the described embodiments will be, in part, readily apparent to those skilled in the art from that description or recognized by practicing the described embodiments, including the detailed description that follows as well as the drawings and the claims.

### BRIEF DESCRIPTION OF DRAWINGS

The following detailed description of specific embodiments of the present disclosure can be best understood when read in conjunction with the following drawing.

FIG. 1 graphically depicts the tensile modulus of the Examples, according to embodiments of the present disclosure;

FIG. 2 graphically depicts the tensile strength of the Examples, according to embodiments of the present disclosure;

FIG. 3 graphically depicts the tensile elongation of the Examples, according to embodiments of the present disclosure;

FIG. 4 graphically depicts tensile strength (y-axis) and tensile elongation (x-axis), according to embodiments of the present disclosure.

### DETAILED DESCRIPTION

There is a need in the art for curable compositions that form cured products having increased toughness while minimizing loss of tensile modulus. One or more embodiments disclosed herein meet this need by providing curable

compositions comprising a free radical polymerizable resin, a cationically polymerizable resin, a free radical photoinitiator, and a photoacid generator, wherein the free radical polymerizable resin comprises a polyester (meth)acrylate oligomer and a (meth)acrylate monomer, and wherein the polyester (meth)acrylate oligomer has a glass transition temperature (Tg) of less than 25 °C.

Definitions

"Actinic light source" refers to a source of electromagnetic radiation that produces at least a portion of its electromagnetic radiation in the ultra-violet range (100 nm to 550 nm).

The term "aliphatic" refers to saturated and unsaturated hydrocarbons, straight chain (i.e., unbranched) or branched, cyclic or acyclic, excluding aromatic groups. The term "aliphatic" includes, but is not limited to, alkyl, alkenyl, alkynyl. Illustrative aliphatic groups thus include, but are not limited to, for example, methyl, ethyl, n-propyl, isopropyl, allyl, n-butyl, sec-butyl, isobutyl, tert-butyl, n-pentyl, sec-pentyl, and the like. isopentyl tert-pentyl, n-hexyl, sec-hexyl, alkenyl groups such as ethenyl, propenyl, 1-methyl-2-butene-1-yl, and alkynyl groups such as ethynyl, 2-propynyl (propargyl), and 1-propynyl.

"Free radical polymerizable resin" refers to a resin capable of polymerizing when exposed to free radicals.

"Cationically polymerizable resin" refers to a resin that forms polymers in the presence of cations.

"Epoxide" refers to a compound, such as a monomer, comprising one or more epoxy groups.

"Curable composition" refers to a composition that changes properties based on a stimulus. Generally, curable compositions of the present disclosure cure through polymerization and/or crosslinking. Generally, those curable compositions cure upon the addition of energy to the system. This energy may come in the form of actinic light, heat, or both. Generally, when compounds in the curable composition contain carbon-carbon double bonds, polymerization (curing) involves reaction of such carbon-carbon double bonds.

The term "photoinitiator" refers to any type of substance that, upon exposure to radiation (e.g., actinic radiation), forms species that initiate the reaction and curing of polymerizing organic substances in a curable composition.

"Free radical photoinitiator" refers to a compound that undergoes a photoreaction on absorption of light, producing reactive free radical species. The reactive species that are generated then initiate curing (polymerization) of the reactive components of the curable composition.

"Photoacid generator" refers to a compound which releases protons or generates other cationic or acidic compounds when exposed to light.

The term "(meth)acrylate" or "(meth)acrylate group" refers to an acrylate group or a methacrylate group. An acrylate group corresponds to a group of the formula $-O-C(=O)-CH=CH_2$. A methacrylate group corresponds to a group of the formula $-O-C(=O)-C(CH_3)=CH_2$.

"Monofunctional" refers to a compound having a single functional group. For example, a monofunctional (meth) acrylate monomer is a monomer having a single (meth)acrylate group.

The term "alkyl" means an optionally substituted monovalent saturated acyclic hydrocarbon group. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethylhexyl, and the like. The term "($C_1$-$C_{40}$) alkyl" means an alkyl having 1 to 40 carbon atoms.

"Polyester" refers to a category of polymers or a section of a block copolymer that has an ester functional group in every repeat unit of the main chain.

The term "glass transition temperature" or "Tg" refers to the temperature at which a material changes from a glassy state to a rubbery state. In this context, the term "glassy" means that the material is hard and brittle while the term "rubbery" means that the material is elastic and flexible. For polymeric materials, the Tg is the critical temperature that separates their glassy and rubbery behaviors. If a polymeric material is at a temperature below its Tg, large-scale molecular motion is severely restricted because the material is essentially frozen. On the other hand, if the polymeric material is at a temperature above its Tg, molecular motion on the scale of its repeat unit takes place, allowing it to be soft or rubbery. Any reference herein to the Tg of a monomer refers to the Tg of a homopolymer formed from that monomer and are well-known from literature. If not reported, the glass transition temperature values provided may be determined in accordance with ASTM E1356-08, "Standard Test Method for Assignment of the Glass Transition Temperatures by Differential Scanning Calorimetry" as the inflection temperature ($T_i$). The glass transition of the oligomers described herein were calculated using the Fox Equation based on the amount and Tg of each monomer used to form the polymeric material.

The "Fox Equation" refers to equation (1):

$$1 / T_{g,mix} \approx \sum_{i} \omega_i / T_{g,i} \qquad \text{equation (1)}$$

where $T_{g,mix}$ is the glass transition temperature of a mixture, such as two or more monomers or an oligomer, and $T_{g,i}$ is the glass transition temperature of the component; and $\omega_i$ is the mass fraction of component i. For two components, A and B, the Fox Equation reduces to equation (2):

$$1 / T_{g,mix} \approx \omega_A / T_{g,A} + \omega_B / T_{g,B}\text{-} \qquad \text{equation (2)}$$

"Number-average molecular weight" or "$M_n$" refers to the statistical average molecular weight of the polymer chains in a sample or grouping. Number-average molecular weights reported herein are determined using a size exclusion chromatography (SEC) using polymethyl (meth)acrylate reference standards and tetrahydrofuran as the solvent, unless expressly noted otherwise.

"Monomer" refers to a molecule with one or more polymerizable functional groups. The monomer has a single molecular weight, typically below 1000 g/mol, preferably 100 to 950 g/mol. As is generally recognized in the field, commercial products of a particular monomer may contain impurities or other chemical species.

"Oligomer" refers to molecules with a distribution of molecular weights and may or may not have one or more polymerizable functional groups. An oligomer may be the reaction product of two or more monomers and typically has a number averaged molecular weight greater than or equal to 500 g/mol, preferably 500 g/mol to 30,000 g/mol, more preferably 1,000 g/mol to 8,000 g/mol. An oligomer may not always have a single molecular weight.

The term "residue" as used herein means the group of atoms left in a product after removal of the functional groups that react with another compound to form linkages. For example, the residue of a diol having structure $HO\text{-}R_3\text{-}OH$ would be understood to be $R_3$.

The term "($C_x$-$C_y$)" refers to the number of carbon atoms comprised in a specific group or linker. For example, a $C_1$-$C_6$ hydrocarbyl is a hydrocarbyl comprising from 1 to 6 carbon atoms.

The term "wt. %" means weight percentage. Unless otherwise mentioned, the weight percentages in a compound or a composition are expressed relative to the weight of the compound or of the composition, respectively.

Where a range of numerical values is recited herein, comprising upper and lower values, unless otherwise stated in specific circumstances, the range is intended to include the endpoints thereof, and all integers and fractions within the range. It is not intended that the scope of the disclosure be limited to the specific values recited when defining a range. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed.

Embodiments of the present disclosure are directed to a curable composition comprising: (A) a free radical polymerizable resin comprising a polyester (meth)acrylate oligomer and a (meth)acrylate monomer (B) a cationically polymerizable resin; (C) a free radical photoinitiator; and (D) a photoacid generator; wherein the polyester (meth)acrylate oligomer has a glass transition temperature (Tg) of less than 25 °C.

The curable composition comprises (A) a free radical polymerizable resin. When combined with the free radical photoinitiator (C) and exposed to actinic radiation within a first wavelength range, the free radical polymerizable resin may polymerize, thereby forming a cured product.

The free radical polymerizable resin may comprise at least one polyester (meth)acrylate oligomer and at least one (meth)acrylate monomer.

The polyester (meth)acrylate oligomer may be multifunctional, including difunctional. In embodiments, most or all of the polyester (meth)acrylate oligomer used are difunctional, such as 95 wt.% to 100 wt.% of the polyester (meth)acrylate oligomer being difunctional based on the total weight of the polyester (meth)acrylate oligomers. As is well-known, (meth) acrylate oligomers, such as polyester (meth)acrylate oligomers may have an average functionality which is not an integer (e.g., an average functionality between 1.9 and 2.1), and such polyester (meth)acrylate oligomer are suitable for use herein.

The polyester (meth)acrylate oligomer may have a glass transition temperature (Tg) of less than 25 °C, such as less than 24 °C, less than 23°C, less than 22 °C, less than 21 °C, less than 20 °C, less than 19 °C, less than 18 °C, less than 17 °C, less than 16 °C, less than 15 °C, less than 14 °C, less than 13°C, less than 12 °C, less than 11 °C, less than 10 °C, less than 9 °C, less than 8 °C, less than 7 °C, less than 6 °C, less than 5 °C, less than 4 °C, less than 3 °C, less than 2 °C, less than 1 °C, or less than 0 °C. Without intending to be bound by any particular theory, it is believed that the inclusion of a polyester (meth)acrylate oligomer having a reduced Tg, such as less than 25 °C may provide a mechanism for energy dissipation in the cured product formed therefrom, which may improve toughening in the cured product.

The polyester (meth)acrylate oligomer may comprise a hydroxyl group.

The polyester (meth)acrylate oligomer may have polydispersity index (PDI) of from 1.5 to 4.5.

The polyester (meth)acrylate oligomer may include residues of linear and cyclic aliphatic acids and aromatic

acids, such as aromatic acids having at least three substituents on the aromatic ring(s) of the acids. In embodiments, the polyester (meth)acrylate oligomer may include residues of 4-methylhexahydrophthalic acid, maleic acid, fumaric acid, adipic acid, succinic acid, malonic acid, benzophenone tetracarboxylic acid, glutaric acid, cyclohexane dicarboxylic acids, dihydrophthalic acid, cyclobutane-1,2,3,4-tetracarboxylic acid, pyromellitic acid, or combinations thereof.

In embodiments, the polyester (meth)acrylate oligomer may not include residues of terephthalic acid. Without intending to be bound by any particular theory, it is believed that insufficiently substituted aromatic polyacids may disadvantageously slow the relaxation dynamics of the polyester oligomers while increasing overall formulation viscosities.

The polyester (meth)acrylate oligomer may include a residue of a polyhydric alcohol having a Tg of less than or equal to -15 °C, such as less than or equal to -25 °C, or less than or equal to -30 °C. Examples of suitable polyhydric alcohols may include linear and branched poly(ethylene oxide)s, poly(propylene oxide)s, poly(tetramethylene oxide)s, poly(1,3-propane diol)s, poly(butadiene) polyols, and dimer acid diols (such as Pripol 2033 from Cargill). The inclusion of a residue of a polyhydric alcohol having a Tg of less than or equal to -15 °C may improve chain mobility, ductile properties, and/or damping properties, each of which may improve toughening of a cured products formed therefrom.

In embodiments, the polyester (meth)acrylate oligomer may have a structure according to formula (I).

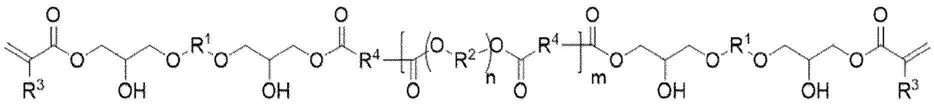

(I)

wherein:

$R^1$ is a divalent ($C_3$-$C_{48}$)hydrocarbon group;
$R^2$ is a divalent ($C_2$-$C_{48}$)hydrocarbon group;
$R^3$ is chosen from -H, a ($C_1$-$C_5$)hydrocarbyl, or combinations thereof;
$R^4$ is a divalent $C_1$-$C_{48}$ aliphatic hydrocarbon group,
n is an integer greater than or equal to 1 and less than or equal to 500; and
m is an integer greater than or equal to 1 and less than or equal to 10.

In embodiments, $R^1$ may be a butylene (such as $-(CH_2)_4-$), a structure according to formula (II), formula (III), formula (IV), formula (V), formula (VI), or combinations thereof.

(II)

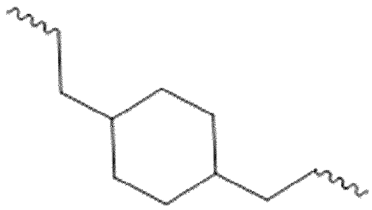

(III)

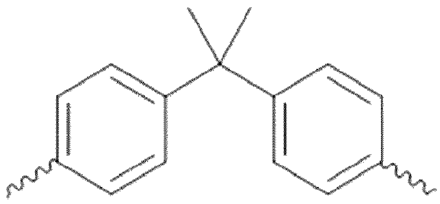

(IV)

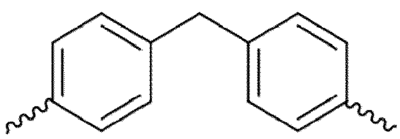

(V)

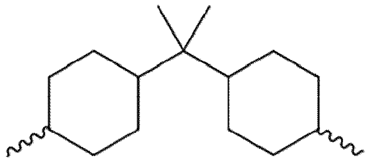

(VI)

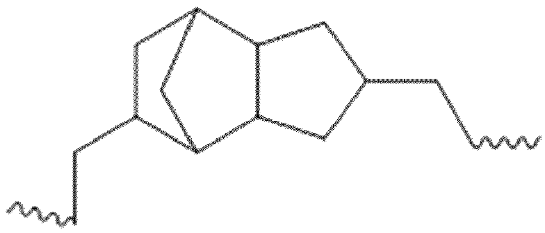

In embodiments, $R^1$ may be selected from the group consisting of a butylene, a structure according to formula (II), formula (III), formula (IV), formula (V), formula (VI), or combinations thereof.

$R^2$ may include an alkylene group. As used herein, the term "alkylene" refers to a divalent radical obtained by removing two hydrogen atoms from an alkane. An alkylene may be linear or branched. An alkylene may have from 2 to 48 carbon atoms. In particular, $R^2$ may comprise an alkylene having the following formula $-(CHR)_y-$ wherein each R is independently a hydrogen atom or an alkyl and y is 2 to 48. For instance, $R^2$ may be a propylene, a butylene, a pentylene, an hexylene, a residue of a dimerized fatty acid (e.g. a Cis fatty acid dimerized to form a $C_{36}$ dimer), or combinations thereof.

In embodiments, n may be an integer greater than or equal to 10, greater than or equal to 15, greater than or equal to 20, greater than or equal to 25, greater than or equal to 30, greater than or equal to 35, greater than or equal to 40, greater than or equal to 45, greater than or equal to 50, greater than or equal to 55, greater than or equal to 60, greater than or equal to 65, greater than or equal to 70, greater than or equal to 75, greater than or equal to 80, greater than or equal to 85, greater than or equal to 90, greater than or equal to 95, or greater than or equal to 100. In embodiments, n may be an integer less than or equal to 450, less than or equal to 400, less than or equal to 375, less than or equal to 350, less than or equal to 325, less than or equal to 300, less than or equal to 275, less than or equal to 250, less than or equal to 225, or less than or equal to 200.

In embodiments, m may be an integer greater than or equal to 1 and less than or equal to 9, greater than or equal to 2 and less than or equal to 8, or greater than or equal to 2 and less than or equal to 7.

In an embodiment, $R^3$ may be -H, methyl, or combinations thereof.

In an embodiment, $R^1$ may be $-(CH_2)_4-$, $R^2$ may be $-CH_2CH(CH_3)-$, $R^3$ may be $-CH_3$, and $R^4$ may be $-(CH_2)_2-$ or $-(CH)_2-$.

In an embodiment, $R^4$ may comprise o-phthaloyl, m-phthaloyl, pyromellitoyl, benzophenone derivatives, thioxanthone derivatives, a residue of 3,3',4,4'-benzophenone tetracarboxylic dianhydride, or combinations thereof.

The polyester (meth)acrylate oligomer may have a number average molecular weight (Mn) of greater than or equal to 4,000 grams per mole (g/mol), such as greater than or equal to 6,000 g/mol, greater than or equal to 8,000 g/mol, greater than or equal to 10,000 g/mol, greater than or equal to 12,000 g/mol, greater than or equal to 14,000 g/mol, greater than or equal to 16,000 g/mol, greater than or equal to 18,000 g/mol, greater than or equal to 20,000 g/mol, greater than or equal to 22,000 g/mol, greater than or equal to 24,000 g/mol, greater than or equal to 26,000 g/mol, greater than or equal to 28,000 g/mol, or greater than or equal to 30,000 g/mol. The polyester (meth)acrylate oligomer may have a number average molecular weight (Mn) of less than or equal to 150,000 g/mol, such as less than or equal to 125,000 g/mol, less than or equal to 100,000 g/mol, less than or equal to 80,000 g/mol, less than or equal to 60,000 g/mol, or less than or equal to 40,000 g/mol.

In embodiments, greater than or equal to 1 wt.% and less than or equal to 50 wt.% of the polyester (meth)acrylate oligomer may have a number average molecular weight of from 4,000 grams per mole (g/mol) to 150,000 g/mol. For instance, from 1 wt.% to 50 wt.%, from 2.5 wt.% to 40 wt.%, from 5 wt.% to 30 wt.%, or any and all ranges and sub-ranges between the foregoing values of the polyester (meth)acrylate oligomer may have a number average molecular weight of from 4,000 grams per mole (g/mol) to 150,000 g/mol.

The free radical polymerizable resin (A) may comprise greater than or equal to 2 wt. % of the polyester (meth) acrylate oligomer, on the basis of the total weight of the free radical polymerizable resin, such as greater than or equal to 3 wt.%, greater than or equal to 4 wt.%, greater than or equal to 5 wt.%, greater than or equal to 6 wt.%, greater than or equal to 7 wt.%, greater than or equal to 8 wt.%, greater than or equal to 9 wt.%, greater than or equal to 10 wt.%, greater than or equal to 15 wt.%, greater than or equal to 20 wt.%, greater than or equal to 25 wt.%, or greater than or equal to 30 wt.%. In embodiments, the free radical polymerizable resin (A) may comprise from 2 wt.% to 60 wt.%, from 5 wt.% to 50 wt.%, from 8

wt.% to 40 wt.%, from 10 wt.% to 35 wt.%, from 12.5 wt.% to 30 wt.% or any and all ranges and sub-ranges between the foregoing values of the polyester (meth)acrylate oligomer, on the basis of the total weight of the free radical polymerizable resin.

The free radical polymerizable resin includes a (meth)acrylate monomer. The (meth)acrylate monomer may be monofunctional (e.g., comprising a single (meth)acrylate group) or multifunctional (e.g., comprising more than one (meth) acrylate groups), including difunctional or a combination thereof. Classes of (meth)acrylate monomers are diverse and well known by those skilled in the art. A wide range of (meth)acrylate monomers may be used herein. The (meth)acrylate monomer may include one or more (meth)acrylate monomers, such as a first (meth)acrylate monomer and a second (meth)acrylate monomer.

In embodiments, at least 2 wt.% of the (meth)acrylate monomer(s) of the free radical polymerizable resin may be multifunctional. In embodiments, the free radical polymerizable resin may not include monofunctional (meth)acrylate monomers. In embodiments, 2 wt.% to 100 wt.% of the (meth)acrylate monomer(s) may be multifunctional, based on the total weight of the (meth)acrylate monomer(s). For instance, from 2 wt.% to 100 wt.%, from 4 wt.% to 98 wt.%, from 6 wt.% to 96 wt.%, from 8 wt.% to 94 wt.%, from 10 wt.% to 92 wt.%, from 12 wt.% to 90 wt.%, from 14 wt.% to 88 wt.%, from 16 wt.% to 86 wt.%, from 18 wt.% to 84 wt.%, from 20 wt.% to 82 wt.%, from 22 wt.% to 80 wt.%, from 24 wt.% to 78 wt.%, from 26 wt.% to 76 wt.%, from 28 wt.% to 74 wt.%, from 30 wt.% to 72 wt.%, from 32 wt.% to 70 wt.%, from 34 wt.% to 68 wt.%, from 36 wt.% to 66 wt.%, from 38 wt.% to 64 wt.%, from 40 wt.% to 62 wt.%, from 42 wt.% to 60 wt.%, from 44 wt.% to 58 wt.%, from 46 wt.% to 56 wt.%, from 48 wt.% to 54 wt.%, from 50 wt.% to 52 wt.%, or any and all ranges and sub-ranges between the foregoing values of the (meth)acrylate monomer(s) may be multifunctional, based on the total weight of the (meth) acrylate monomer(s).

Examples of suitable monofunctional (meth)acrylate monomers include, but are not limited to, (meth)acrylate esters of aliphatic alcohols (wherein the aliphatic alcohol may be straight chain, branched or alicyclic and may be a mono-alcohol or a polyalcohol (e.g. a di-alcohol), provided only one hydroxyl group is esterified with (meth)acrylic acid); (meth) acrylate esters of aromatic alcohols (such as phenols, including alkylated phenols); (meth)acrylate esters of alkylaryl alcohols (such as benzyl alcohol); (meth)acrylate esters of oligomeric and polymeric glycols such as diethylene glycol, triethylene glycol, dipropylene glycol, tripropylene glycol, polyethylene glycol, and polypropylene glycol); (meth)acrylate esters of monoalkyl ethers of glycols and oligoglycols; (meth)acrylate esters of alkoxylated (e.g., ethoxylated and/or propoxylated) aliphatic alcohols (wherein the aliphatic alcohol may be straight chain, branched or alicyclic and may be a mono-alcohol or a polyalcohol (e.g. a di-alcohol), provided only one hydroxyl group of the alkoxylated aliphatic alcohol is esterified with (meth)acrylic acid); (meth)acrylate esters of alkoxylated (e.g., ethoxylated and/or propoxylated) aromatic alcohols (such as alkoxylated phenols); caprolactone mono(meth)acrylates; and the like. The following compounds are specific examples of monofunctional (meth)acrylate monomers suitable for use in component (A): methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth) acrylate; tridecyl (meth)acrylate; tetradecyl (meth)acrylate; hexadecyl (meth)acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth) acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth) acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

As noted above, the (meth)acrylate monomer may be multifunctional. A multifunctional (meth)acrylate monomer may have from 2 to 6 (meth)acrylate groups, in particular 2 or 3 (meth)acrylate groups. Examples of suitable multifunctional (meth)acrylate monomers include bisphenol A di(meth)acrylate; hydrogenated bisphenol A di(meth)acrylate; ethylene glycol di(meth)acrylate; diethylene glycol di(meth)acrylate; triethylene glycol di(meth)acrylate; tetraethylene glycol di(meth)acrylate; polyethylene glycol di(meth)acrylate; propylene glycol di(meth)acrylate; dipropylene glycol di(meth) acrylate; tripropylene glycol di(meth)acrylate; tetrapropylene glycol di(meth)acrylate; polypropylene glycol di(meth) acrylate; polytetramethylene glycol di(meth)acrylate; 1,2-butanediol di(meth)acrylate; 2,3-butanediol di(meth)acrylate; 1,3-butanediol di(meth)acrylate; 1,4-butanediol di(meth)acrylate; 1,5-pentanediol di(meth)acrylate; 1,6-hexanediol di(meth)acrylate; 1,8-octanediol di(meth)acrylate; 1,9-nonanediol di(meth)acrylate; 1,10-nonanediol di(meth)acrylate; 1,12-dodecanediol di(meth)acrylate; neopentyl glycol di(meth)acrylate; 2-methyl-2,4-pentanediol di(meth)acrylate; polybutadiene di(meth)acrylate; cyclohexane-1,4-dimethanol di(meth)acrylate; tricyclodecane dimethanol di(meth)acrylate; metallic di(meth)acrylates; modified metallic di(meth)acrylates; glyceryl di(meth)acrylate; glyceryl tri(meth)acrylate; trimethylolethane tri(meth)acrylate; trimethylolethane di(meth)acrylate; trimethylolpropane tri(meth)acrylate; trimethylolpropane di(meth)acrylate; pentaerythritol di(meth)acrylate; pentaerythritol tri(meth)acrylate; pentaerythritol tetra(meth) acrylate, di(trimethylolpropane) diacrylate; di(trimethylolpropane) triacrylate; di(trimethylolpropane) tetraacrylate, sorbitol penta(meth)acrylate; di(pentaerythritol) tetraacrylate; di(pentaerythritol) pentaacrylate; di(pentaerythritol) hexa(meth) acrylate; tris (2-hydroxyethyl) isocyanurate tri(meth)acrylate; as well as the alkoxylated (e.g., ethoxylated and/or propoxylated) derivatives thereof; and combinations thereof. Examples of other suitable monofunctional (meth)acrylate monomers include, for example, caprolactone (meth)acrylate, 2-(2-ethoxyethoxy)ethyl (meth)acrylate, 2-phenoxyethyl (meth)acrylate, isooctyl (meth)acrylate, 2-octyl (meth)acrylate, 2-ethylhexyl (meth)acrylate, isodecyl (meth)acrylate, ethoxyethoxyethyl (meth)acrylate, neopentyl glycol (meth)acrylates and alkoxylated analogues thereof, as well as caprolactone-based (meth)acrylates prepared by addition of one, two, three or more moles of caprolactone to a hydroxyalkyl (meth)acrylate such as hydroxyethyl (meth)acrylate ("caprolactone adducts of hydroxyalkyl (meth)acrylates") and combinations thereof.

The free radical polymerizable resin (A) may comprise greater than or equal to 5 wt. % of the (meth)acrylate monomer, on the basis of the total weight of the free radical polymerizable resin, such as greater than or equal to 10.0 wt.%, greater than or equal to 15.0 wt.%, greater than or equal to 20.0 wt.%, greater than or equal to 25.0 wt.%, greater than or equal to 30.0 wt.%, greater than or equal to 35.0 wt.%, greater than or equal to 40.0 wt.%, greater than or equal to 45.0 wt.%, greater than or equal to 50.0 wt.%, greater than or equal to 55.0 wt.%, greater than or equal to 60.0 wt.%, greater than or equal to 65.0 wt.%, greater than or equal to 70.0 wt.%, greater than or equal to 75.0 wt.%, greater than or equal to 80.0 wt.%, greater than or equal to 85.0 wt.%, greater than or equal to 90.0 wt.%, or greater than or equal to 95.0 wt.%. In embodiments, the free radical polymerizable resin (A) may comprise from 5 wt.% to 98 wt.%, from 30 wt.% to 85 wt.%, from 60 wt.% to 80 wt.%, or any and all ranges and sub-ranges between the foregoing values of the (meth)acrylate monomer, on the basis of the total weight of the free radical polymerizable resin.

The free radical polymerizable resin (A) may comprise other ethylenically unsaturated materials, such as allyls, malonates, and itaconates. The free radical polymerizable resin may consist essentially of or consist of the combination of the (meth)acrylate monomer(s) and the polyester (meth)acrylate oligomer(s). The weight ratio of the (meth)acrylate monomer(s) to the polyester (meth)acrylate oligomer(s) in the free radical polymerizable resin may vary over a wide range, such as from 1:9 to 49:1, from 1:4 to 39:1, from 1:2 to 19:1, from 2:1 to 19:1, from 1:1 to 19:1, or from 1:1 to 3:1.

The curable composition comprises (C) a free radical photoinitiator. The free radical photoinitiator may be sensitive to actinic radiation within a first wavelength range. The free radical photoinitiator is operable to cure the free radical polymerizable resin. Generally, free radical photoinitiators can adopt two different modes of action, and are classified by mode of action as Norrish Type I and Norrish Type II photo-initiators. In some embodiments, the free radical photoinitiator comprises a Norrish Type I photo-initiator, a Norrish Type II photo-initiator, or both.

As used herein, the term "activity" with reference to Norrish Type I and Norrish Type II activity is intended to relate to Norrish photoinitiation and analogous reactions. For instance, a photoinitiator having Norrish Type I activity would be a photoinitiator characterized by a cleavage reaction into two radical fragments of the original photoinitiator on exposure to actinic radiation within a first wavelength range. For an initiator having Norrish Type II activity, exposure to actinic radiation within a first wavelength range causes the formation of a radical species which can abstract a hydrogen to create a second radical species which can initiate a photo polymerization. The Norrish Type I and Norrish Type II mechanisms are known to the person of ordinary skill in the art. Free radical photoinitiators suitable for use in the curable compositions of the present disclosure include, but are not limited to, benzoins, benzoin ethers, acetophenones, $\alpha$-hydroxy acetophenones, benzyl, benzyl ketals, anthraquinones, phosphine oxides, acylphosphine oxides, $\alpha$-hydroxyketones, phenylglyoxylates, $\alpha$-aminoketones, benzophenones, thioxanthones, xanthones, acridine derivatives, phenazene derivatives, quinoxaline derivatives, triazine compounds, benzoyl formates, aromatic oximes, metallocenes, acylsilyl or acylgermanyl compounds, camphorquinones, polymeric derivatives thereof, and mixtures thereof.

Examples of suitable free radical photoinitiators may include, but are not limited to, 2-methylanthraquinone, 2-ethylanthraquinone, 2-chloroanthraquinone, 2-benzyanthraquinone, 2-t-butylanthraquinone, 1,2-benzo-9,10-anthraquinone, benzyl, benzoins, benzoin ethers, benzoin, benzoin methyl ether, benzoin ethyl ether, benzoin isopropyl ether, alpha-methylbenzoin, alpha-phenylbenzoin, Michler's ketone, acetophenones such as 2,2-dialkoxybenzophenones and 1-hydroxyphenyl ketones, benzophenone, 4,4'-bis-(diethylamino) benzophenone, acetophenone, 2,2-diethyloxyacetophenone, diethyloxyacetophenone, 2-isopropylthioxanthone, thioxanthone, diethyl thioxanthone, 1,5-acetonaphthylene, benzil ketone, $\alpha$-hydroxy keto, 2,4,6-trimethylbenzoyldiphenyl phosphine oxide, benzyl dimethyl ketal, 2,2-dimethoxy-1,2-diphenylethanone, 1-hydroxycylclohexyl phenyl ketone, 2-methyl-1-[4-(methylthio) phenyl]-2-morpholinopropanone-1, 2-hydroxy-2-methyl-1-phenyl-propanone, oligomeric $\alpha$-hydroxy ketone, benzoyl phosphine oxides, phenylbis(2,4,6-trimethylbenzoyl)phosphine oxide, ethyl(2,4,6-trimethylbenzoyl)phenyl phosphinate, anisoin, anthraquinone, anthraquinone-2-sulfonic acid, sodium salt monohydrate, (benzene) tricarbonylchromium, benzil, benzoin isobutyl ether, benzophenone/1-hydroxycyclohexyl phenyl ketone, 50/50 blend, 3,3',4,4'-benzophenonetetracarboxylic dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, dibenzosuberenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide /2-hydroxy-2-methylpropiophenone, 50/50 blend, 4'-ethoxyacetophenone, 2,4,6-trimethylbenzoyldiphenylphophine oxide, phenyl bis(2,4,6-trimethyl benzoyl)phosphine oxide, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methybenzoylformate, 2-methyl-4'-(methylthio)-2-morpholinopropiophenone, phenanthrenequinone, 4'-phenoxyacetophenone, (cumene)cyclopentadienyl iron(ii) hexafluorophosphate, 9,10-diethoxy and 9,10-dibutoxyanthracene, 2-ethyl-9,10-dimethoxyanthracene, thioxanthen-9-one and combinations thereof.

Suitable free radical photoinitiators include a benzophenone (such as those available from Sartomer Americas, under the trademarks Speedcure™ BP, Speedcure™ 7005, and Speedcure™ 7006), a thioxanthone (such as available from Sartomer Americas, under the trademarks Speedcure™ 7010 and Speedcure™ ITX), an $\alpha$-hydroxy acetophenone, an acylphosphine oxide (such as available from Sartomer Americas, under the trademarks Speedcure™ BPO, Speedcure™ TPO and Speedcure™ TPO-L), a phenylacetophenone (such as available from Sartomer Americas, under the trademark Speedcure™ BKL) and combinations thereof.

The free radical photoinitiator may be a phenylacetophenonone. The phenylacetophenonone may have a structure according to formula (XII).

(XII)

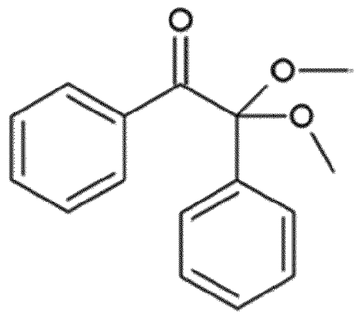

The free radical photoinitiator may be sensitive to actinic radiation within a first wavelength range. Being sensitive to actinic radiation within the first wavelength range means that when the free radical photoinitiator is exposed to actinic radiation within the first wavelength range, the free radical photoinitiator generates a radical. The first wavelength range may include ultra-violet (UV) light, such as light with a wavelength of 365 nm to 450 nm. In some embodiments, the actinic radiation within a first wavelength range may be produced by an LED light, such as an LED emitting at 365 nm, 395 nm, 405 nm, or a combination thereof.

The free radical photoinitiator may have absorption maxima within the wavelengths defining first wavelength range. The free radical photoinitiator may have additional absorption maxima outside the wavelengths defining the first wavelength range. In addition to the light of the first wavelength range, the free radical photoinitiator may be sensitive to wavelengths outside those defined as the first wavelength range, including those of the second wavelength range.

In embodiments, the curable composition may comprise from 0.1 wt.% to 10 wt.%, from 0.5 wt.% to 5 wt.%, from 1 wt.% to 3 wt.%, or any and all ranges and sub-ranges between the foregoing values of the free radical photoinitiator, on the basis of the total weight of the curable composition.

The curable composition comprises (B) a cationically polymerizable resin. The term "cationically polymerizable resin" means a compound comprising a polymerizing functional group that polymerizes via a cationic mechanism, for example a cationically polymerizable group may comprise a heterocyclic group or a carbon-carbon double bond substituted with an electron-donating group. In a cationic polymerization mechanism, a cationic initiator may generate a Brønsted acid (or super acid) H+ or a reactive cationic species upon light exposure. These cationic species may induce chain growth by reacting with a cationically polymerizable compound. Without being limited by theory, it would appear that the cationically polymerizable resin, in conjunction with the photoacid generator, polymerizes more slowly than the free radical polymerizable resin.

The cationically polymerizable resin may be selected from epoxides, oxetanes, vinyl ethers, vinyl amides, oxolanes, cyclic acetals, cyclic lactones, thiiranes, thiethanes, spiro orthoesters, ethylenically unsaturated compounds other than (meth)acrylates, derivatives thereof, and mixtures thereof.

The cationically polymerizable resin may comprise aromatic epoxides, cycloaliphatic epoxides, oxetanes and mixtures thereof. Suitable epoxy-functionalized compounds capable of being cationically polymerized include glycidyl ethers, in particular mono-, di-, tri- and polyglycidyl ether compounds, and alicyclic ether compounds including those comprising residue of carboxylic acids such as, for example, alkylcarboxylic acid residual groups, alkylcycloalkylcarboxylic acid residual groups and dialkyl dicarboxylic acid residual groups.

Examples of suitable cationically polymerizable resins may include cyclic ether compounds such as epoxy

compounds, oxetane compounds, cyclic lactone compounds, cyclic acetal compounds, cyclic thioether compounds, spiro orthoester compounds, and vinylether compounds. Specific examples of cationically polymerizable compounds include bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)-cyclohexane-1,4-dioxane, bis(3,4-epoxycyclohexylmethyl)adipate, vinylcyclohexene oxide, 4-vinylepoxycyclohexane, vinylcyclohexene dioxide, limonene oxide, limonene dioxide, bis(3,4-epoxy-6-methylcyclohexylmethyl)adipate, 3,4-epoxy-6-methylcyclohexyl-3',4'-epoxy-6'-methylcyclohexanecarboxylate, ε-caprolactone-modified 3,4-epoxycyclohexylmethyl-3',4'-epoxycyclohexane carboxylates, trimethylcaprolactone-modified 3,4-epoxycyclohexylmethyl-3',4'-epoxycyclohexane carboxylates, β-methyl-δ-valerolactone-modified 3,4-epoxycyclohexcylmethyl-3',4'-epoxycyclohexane carboxylates, methylenebis(3,4-epoxycyclohexane), bicyclohexyl-3,3'-epoxide, bis(3,4-epoxycyclohexyl) with a linkage of -O-, -S-, -SO-, $-SO_2-$, $-C(CH_3)_2-$, $-CBr_2-$, $-C(CBr_3)_2-$, $-C(CF_3)_2-$, $-C(CCl_3)_2-$, or $-CH(C_6H_5)-$, dicyclopentadiene diepoxide, di(3,4-epoxycyclohexylmethyl) ether of ethylene glycol, ethylenebis(3,4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, neopentylglycol diglycidyl ether, glycerol triglycidyl ether, trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidated soybean oil, epoxybutylstearic acid, epoxyoctylstearic acid, epoxidated linseed oil, epoxidated polybutadiene, 1,4-bis[(3-ethyl-3-oxetanylmethoxy)methyl]benzene, 3-ethyl-3-hydroxymethyloxetane, 3-ethyl-3-(3-hydroxypropyl)oxymethyloxetane, 3-ethyl-3-(4-hydroxybutyl)oxymethyloxetane, 3-ethyl-3-(5-hydroxypentyl)oxymethyloxetane, 3-ethyl-3-phenoxymethyloxetane, bis((1-ethyl(3-oxetanyl))methyl)ether, 3-ethyl-3-((2-ethylhexyloxy)methyl)oxetane, 3-ethyl-((triethoxysilylpropoxymethyl)oxetane, 3-(meth)-allyloxymethyl-3-ethyloxetane, (3-ethyl-3-oxetanylmethoxy)methyl benzene, 4-fluoro-[1-(3-ethyl-3-oxetanylmethoxy)methyl]benzene, 4-methoxy-[1-(3-ethyl-3-oxetanylmethoxy)methyl]-benzene, [1-(3-ethyl-3-oxetanylmethoxy)ethyl]phenyl ether, isobutoxymethyl(3-ethyl-3-oxetanylmethyl)ether, 2-ethylhexyl(3-ethyl-3-oxetanylmethyl)ether, ethyldiethylene glycol(3-ethyl-3-oxetanylmethyl)ether, dicyclopentadiene (3-ethyl-3-oxetanylmethyl)ether, dicyclopentenyloxyethyl(3-ethyl-3-oxetanylmethyl)ether, dicyclopentenyl(3-ethyl-3-oxetanylmethyl)ether, tetrahydrofurfuryl(3-ethyl-3-oxetanylmethyl)ether, 2-hydroxyethyl(3-ethyl-3-oxetanylmethyl)ether, 2-hydroxypropyl(3-ethyl-3-oxetanylmethyl)ether, or combination thereof.

In embodiments, the cationically polymerizable resin comprises a compound selected from the group consisting of bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)-cyclohexane-1,4-dioxane, bis(3,4-epoxycyclohexylmethyl)adipate, vinylcyclohexene oxide, 4-vinylepoxycyclohexane, vinylcyclohexene dioxide, limonene oxide, limonene dioxide, bis(3,4-epoxy-6-methylcyclohexylmethyl)adipate, 3,4-epoxy-6-methylcyclohexyl-3',4'-epoxy-6'-methylcyclohexanecarboxylate, ε-caprolactone-modified 3,4-epoxycyclohexylmethyl-3',4'-epoxycyclohexane carboxylates, trimethylcaprolactone-modified 3,4-epoxycyclohexylmethyl-3',4'-epoxycyclohexane carboxylates, β-methyl-δ-valerolactone-modified 3,4-epoxycyclohexcylmethyl-3',4'-epoxycyclohexane carboxylates, methylenebis(3,4-epoxycyclohexane), bicyclohexyl-3,3'-epoxide, bis(3,4-epoxycyclohexyl) with a linkage of -O-, -S-, -SO-, $-SO_2-$, $-C(CH_3)_2-$, $-CBr_2-$, $-C(CBr_3)_2-$, $-C(CF_3)_2-$, $-C(CCl_3)_2-$, or $-CH(C_6H_5)-$, dicyclopentadiene diepoxide, di(3,4-epoxycyclohexylmethyl) ether of ethylene glycol, ethylenebis(3,4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, neopentylglycol diglycidyl ether, glycerol triglycidyl ether, trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidated soybean oil, epoxybutylstearic acid, epoxyoctylstearic acid, epoxidated linseed oil, epoxidated polybutadiene, 1,4-bis[(3-ethyl-3-oxetanylmethoxy)methyl]benzene, 3-ethyl-3-hydroxymethyloxetane, 3-ethyl-3-(3-hydroxypropyl)oxymethyloxetane, 3-ethyl-3-(4-hydroxybutyl)oxymethyloxetane, 3-ethyl-3-(5-hydroxypentyl)oxymethyloxetane, 3-ethyl-3-phenoxymethyloxetane, bis((1-ethyl(3-oxetanyl))methyl)ether, 3-ethyl-3-((2-ethylhexyloxy)methyl)oxetane, 3-ethyl-((triethoxysilylpropoxymethyl)oxetane, 3-(meth)-allyloxymethyl-3-ethyloxetane, (3-ethyl-3-oxetanylmethoxy)methyl benzene, 4-fluoro-[1-(3-ethyl-3-oxetanylmethoxy)methyl]benzene, 4-methoxy-[1-(3-ethyl-3-oxetanylmethoxy)methyl]-benzene, [1-(3-ethyl-3-oxetanylmethoxy)ethyl]phenyl ether, isobutoxymethyl(3-ethyl-3-oxetanylmethyl)ether, 2-ethylhexyl(3-ethyl-3-oxetanylmethyl)ether, ethyldiethylene glycol(3-ethyl-3-oxetanylmethyl)ether, dicyclopentadiene (3-ethyl-3-oxetanylmethyl)ether, dicyclopentenyloxyethyl(3-ethyl-3-oxetanylmethyl)ether, dicyclopentenyl(3-ethyl-3-oxetanylmethyl)ether, tetrahydrofurfuryl(3-ethyl-3-oxetanylmethyl)ether, 2-hydroxyethyl(3-ethyl-3-oxetanylmethyl)ether, 2-hydroxypropyl(3-ethyl-3-oxetanylmethyl)ether, and any combination thereof.

The cationically polymerizable resin may comprise an epoxide resin, preferably a multi-functional (preferably difunctional) epoxide resin.

The epoxide may comprise a cycloaliphatic epoxide. The cationically polymerizable resin may comprise a difunctional epoxide resin, such as a difunctional cycloaliphatic epoxide resin. The difunctional cycloaliphatic epoxide resin may have a structure according to formula (VII). Suitable commercially available epoxides of formula (VII) include UviCure S105, available from Sartomer Americas.

(VII) 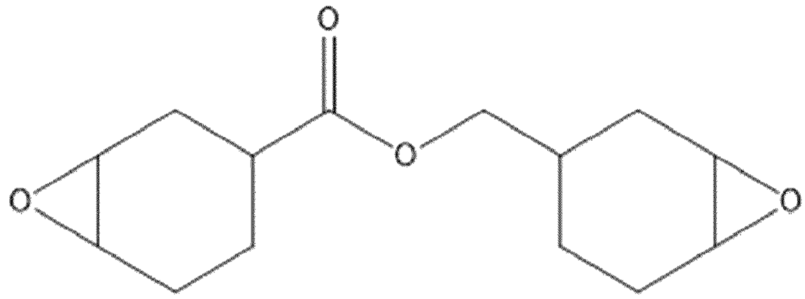

The cationically polymerizable resin may comprise a structure according to formula (VIII). Suitable commercially available epoxides of formula (VIII) include DER331, available from Dow Chemical.

(VIII) 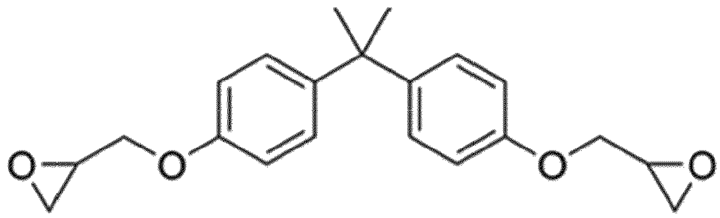

The cationically polymerizable resin may comprise at least 5 wt. % of epoxide resin on the basis of the total weight of the cationically polymerizable resin (B), such as at least 10 wt. %, at least 20 wt. %, at least 30 wt. %, at least 40 wt. %, at least 50 wt. %, at least 60 wt. %, at least 70 wt. %, at least 80 wt. %, at least 90 wt. %, at least 95 wt. %, at least 99 wt. %, or even at least 99.9 wt. %. The cationically polymerizable resin may comprise, consist essentially of, or consist of at least one epoxide resin.

Suitable oxetanes capable of being cationically polymerized may include but are not limited to trimethylene oxide, 3,3- dimethyloxetane, 3,3-dichloromethyloxetane, 3-ethyl-3-phenoxymethyloxetane, and bis(3-ethyl-3- methyloxy)butane, 3-ethyl-3-oxetanemethanol.

The cationically polymerizable resin may comprise an oxetane resin. In embodiments, the oxetane resin may be monofunctional. The monofunctional oxetane resin may have a structure according to formula (IX).

(IX) 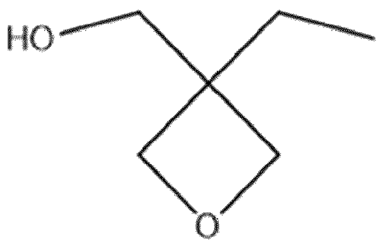

The cationically polymerizable resin may comprise 0 wt.%, at least 5 wt.%, at least 10 wt.%, at least 15 wt.%, at least 20 wt. %, at least 30 wt. %, at least 40 wt. %, at least 50 wt. %, at least 60 wt. %, at least 70 wt. %, or at least 75 wt. % of oxetane resin on the basis of the total weight of the cationically polymerizable resin (B). In embodiments, the cationically polymerizable resin may comprise from 0 wt.% to 80 wt.% of oxetane resin on the basis of the total weight of the cationically polymerizable resin (B). The cationically polymerizable resin may comprise, consist essentially of, or consist of at least one

epoxide resin. The cationically polymerizable resin may comprise, consist essentially of, or consist of at least two epoxide resins.

The cationically polymerizable resin may comprise at least 5 wt. %, such as at least 10 wt. %, at least 20 wt. %, at least 30 wt. %, at least 40 wt. %, at least 50 wt. %, at least 60 wt. %, at least 70 wt. %, at least 80 wt. %, at least 90 wt. %, at least 95 wt. %, at least 99 wt. %, or even at least 99.9 wt. % of epoxide resin and oxetane resin on the basis of the total weight of the cationically polymerizable resin (B). The cationically polymerizable resin may comprise, consist essentially of, or consist of at least one epoxide resin and at least one oxetane resin.

In one embodiment, the cationically polymerizable resin may comprise from 5 wt.% to 80 wt.% epoxide resin and from 5 wt.% to 80 wt.% oxetane resin, based on a total weight of the cationically polymerizable resin.

In one embodiment, the cationically polymerizable resin may comprise from 50 wt.% to 90 wt.% epoxide resin and from 10 wt.% to 50 wt.% oxetane resin, based on a total weight of the cationically polymerizable resin.

The cationically polymerizable resin may comprise 0 wt.% to 50 wt.% of polyol on the basis of the total weight of the cationically polymerizable resin (B). The cationically polymerizable resin may comprise 0 wt.%, at least 5 wt.%, at least 10 wt.%, at least 15 wt.%, at least 20 wt. %, at least 30 wt. %, or at least 40 wt. %, of polyol on the basis of the total weight of the cationically polymerizable resin (B).

In embodiments the cationically polymerizable resin may comprise, consist essentially of, or consist of structures according to formula (VII), formula (VIII), formula (IX), or combinations thereof.

Suitable oxolanes capable of being cationically polymerized include tetrahydrofuran and 2,3- dimethyl tetrahydrofuran. Suitable cyclic acetals capable of being cationically polymerized include trioxane, 1,3-dioxolane, and 1,3,6-trioxanecyclooctane.

Suitable cyclic lactones capable of being cationically polymerized include b-propiolactone and e- caprolactone.

Suitable thiiranes capable of being cationically polymerized include ethylene sulfide, 1,2-propylene sulfide, and thioepichlorohydrin.

Suitable thiethanes capable of being cationically polymerized include 3,3-dimethylthiethane.

Suitable spiro orthoesters capable of being cationically polymerized are compounds obtained by the reaction of an epoxy compound and a lactone.

Additional suitable ethylenically unsaturated compounds capable of being cationically polymerized include vinyl ethers such as ethylene glycol divinyl ether, triethylene glycol divinyl ether and trimethylolpropane trivinyl ether; aliphatic vinyl monomers such as vinylcyclohexane; olefins such isobutylene; dienes such as butadiene; vinyl alkyl ethers; vinyl aromatic monomers such as styrene and alkylstyrenes; unsaturated polymers such as polybutadiene; derivatives of the above organic substances; and the like, at least some of which may also be polymerizable by free radical mechanisms.

The curable composition comprises (D) a photoacid generator. The photoacid generator may be sensitive to actinic radiation in a second wavelength range. In embodiments, the second wavelength range may substantially overlap with the first wavelength range such that both the (C) free radical photoinitiator and the (D) photoacid generator may be activated by a single actinic light source. Generally, photoacid generators are often salts, for instance iodonium and sulfonium salts. When these salts are irradiated with the actinic radiation within the second wavelength range, they undergo homolytic bond cleavage forming radicals that react with a proton donor to give a Brønsted or Lewis acid. This acid initiates the polymerization reaction.

The photoacid generator (also known as a cationic photoinitiator) may comprise onium salts, such as iodonium, sulfonium, pyridinium, alkoxypyridinium, phosphonium, oxonium, or diazonium salts. In embodiments, the photoacid generator may comprise sulfonium salts, iodonium salts, and/or other onium salts. In particular, the photoacid generator may be an onium salt, such as a diaryliodonium salt and/or a triarylsulfonium salt. Included among such photoacid generator are sulfonium salts. Included among sulfonium salts are aromatic sulfonium salts. Specific examples thereof include triphenylsulfonium salts, methyldiphenylsulfonium salts, dimethylphenylsulfonium salts, diphenylnaphthylsulfonium salts and di(methoxy-naphthyl)methylsulfonium salts. Included among such aromatic sulfonium salts are aromatic sulfonium salts with hexafluorophosphate ions (PF6-) or hexafluoroantimonate ions (SbF6-) as counterions. Specific examples include triphenylsulfonium hexafluorophosphate, methyldiphenylsulfonium hexafluorophosphate, dimethylphenyl-sulfonium hexafluorophosphate, diphenylnaphthyl-sulfonium hexafluorophosphate, di(methoxynaphthyl)methylsulfonium hexafluoro-phosphate and triarylsulfonium hexafluoroantimonate (e.g., Speedcure™ 976).

The photoacid generator may comprise a diphenylsulfoniumtriarylsulfonium salt, such as (Sulfanediyldibenzene-4,1-diyl)bis(diphenylsulfonium) bis(hexafluoroantimonate). The diphenylsulfoniumtriarylsulfonium salt may comprise a structure according to formula (X), formula (XI), or both. Suitable diphenylsulfoniumtriarylsulfonium salt based photoacid generators are available from Sartomer Americas, under the trademark Speedcure™ 976.

(X)

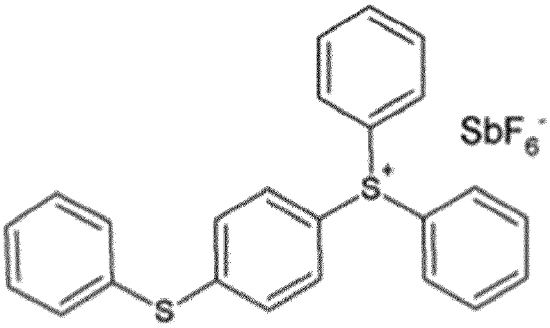

(XI)

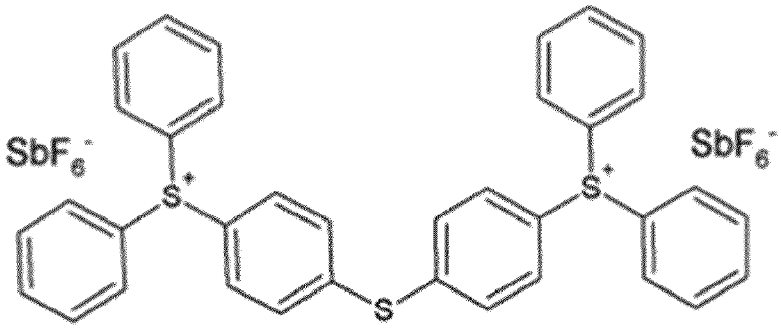

In embodiments, the photoacid generator may comprise at least 80 wt. %, at least 90 wt. %, at least 95 wt. %, at least 99 wt. %, or even at least 99.9 wt. % of the onium salt, such as the sulfonium salt, on the basis of the total weight of the photoacid generator. The photoacid generator may comprise, consist of, or consist essentially of at least one onium salt.

The photoacid generator may optionally be coupled to a photosensitizing compound. Without being limited by theory, certain radical photoinitiators, when excited with light, can function as reducing agents to interact with the photoacid generator (such as an iodonium salt) in a redox reaction. The resulting oxidized radical photoinitiator is then a cation, which may initiate cationic polymerization directly or interact with other components in the formulation to produce active cations which can initiate cationic photopolymerization. In embodiments, the photosensitizing compound may be the free radical photoinitiator sensitive to actinic radiation within a first wavelength range. In embodiments, the free radical photoinitiator may be a Norrish type I photoinitiator. Examples of such Type I photoinitiators include but are not limited to Speedcure™ TPO, Speedcure™ BKL (Irgacure 651), and Speedcure™ BPO (BAPO). In other embodiments, the free radical photoinitiator may be selected from various Norrish Type II photoinitiators such as xanthone, thioxanthone, isopropylthioxanthone, chloropropoxythioxanthone, diethylthioxanthone, benzophenone, and acetophenone, or derivatives thereof, as long as said photosensitizer absorbs at the desired wavelength. In embodiments, the photoacid generator may be an iodonium salt and the free radical photoinitiator may be selected from xanthone, thioxanthone, isopropylthioxanthone, chloropropoxythioxanthone, diethylthioxanthone, benzophenone, and acetophenone, acylphosphine oxide, or derivatives thereof.

Suitable iodonium salts may comprise or may be selected from the group consisting of bis(4-dodecylphenyl) iodonium hexafluoroantimonate (formula (XIV)); bis-(4-t-butylphenyl)-iodonium hexafluorophosphate (formula (XV)); and 4-isopropyl-4'-methyldiphenyliodonium tetrakis(pentafluorophenyl)borate (formula (XVI)). Suitable commercially available bis(4-dodecylphenyl)iodonium hexafluoroantimonate of formula (XIV) are available from Sartomer Americas under the trademark Speedcure™ 937. Suitable commercially available bis-(4-t-butylphenyl)-iodonium hexafluorophosphate of formula (XV) are available from Sartomer Americas under the trademark Speedcure™ 938. Suitable commercially available 4-isopropyl-4'-methyldiphenyliodonium tetrakis(pentafluorophenyl)borate of formula (XVI) are available from Sartomer Americas under the trademark Speedcure™ 939.

(XIV) 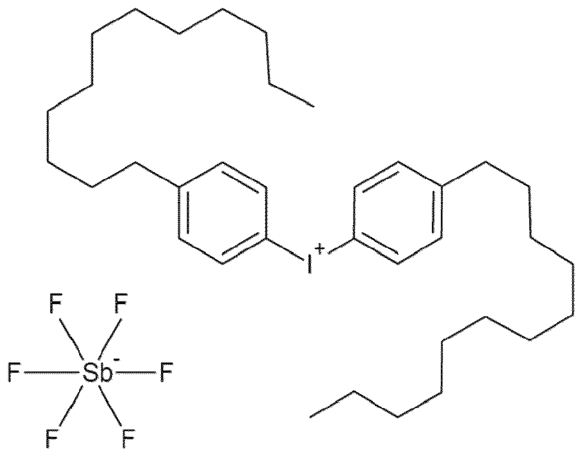

(XV) 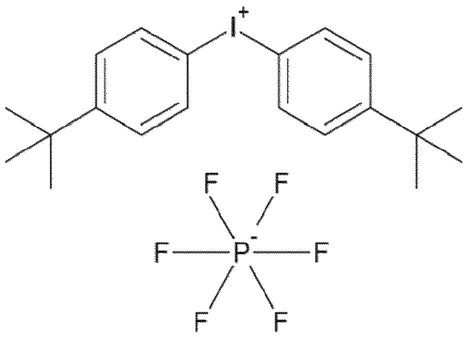

(XVI) 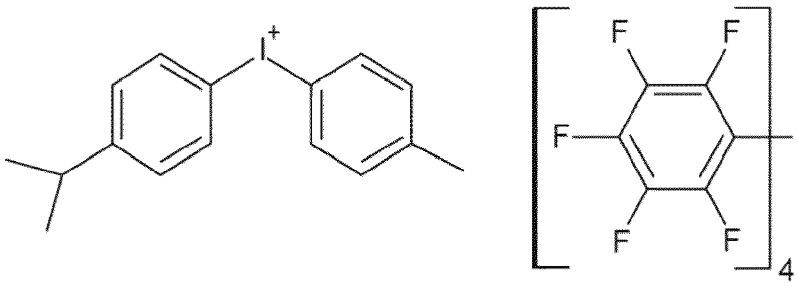

The curable compositions of the present disclosure may contain one or more additives in addition to the above-mentioned components. Such additives include, but are not limited to, antioxidants, ultraviolet absorbers, radical scavengers, photostabilizers, foam inhibitors, flow or leveling agents, colorants, pigments, dispersants (wetting agents), slip additives, fillers, thixotropic agents, matting agents, accelerators, adhesion promoters (such as acidic adhesion promoters), tackifiers, thermoplastics and other types of polymers, waxes or other various additives, including any of the additives conventionally utilized in the coating, sealant, adhesive, molding, or ink arts. In embodiments, the curable composition may comprise from 0 wt. % to 20%, from 0 wt. % to 10 wt. %, from 0 wt. % to 5 wt. %, from 0 wt. % to 1 wt. %, from 0 wt. % to 2 wt. %, from 0 wt. % to 0.1 wt. %, from 0 wt. % to 0.01 wt. %, or any subset thereof of the additives. Such additives may either be separately added to the curable composition at any time during its manufacture or may be included in either or both of the free radical polymerizable resin or cationically polymerizable resins.

In embodiments, the curable composition may not include any additional chain transfer agents, excluding any pendant groups on the polyester (meth)acrylate oligomer that may at least partially act as a chain transfer agent. In other embodiments, the curable composition may include a chain transfer agent.

In embodiments, the curable composition may not include impact-modifying particles. Without intending to be bound by any particular theory, it is believed that the inclusion of the polyester (meth)acrylate oligomer in the curable composition may increase the toughening of a cured product formed therefrom, which may reduce or remove a need to include impact-modifying particles in the curable composition.

In embodiments, the curable compositions of the present disclosure may not include hot melt processable polymers, such as acrylic hot melt polymers, (also known as hot glues), which are generally 100% solid formulations based on thermoplastic polymers. Hot melt processable polymers are solid at room temperature and are 'activated' upon heating

beyond their softening point. Once melted, the adhesive can then be applied onto a substrate in its liquefied or molten state. A high molecular weight hot melt processable polymer is a polymer with a molecular weight (Mn) of from 50,000 g/mol to 500,000 g/mol, such as from 150,000 g/mol to 200,000 g/mol; a molecular weight (Mw) of from 100,000 g/mol to 1,000,000 g/mol, such as from 400,000 g/mol to 700,000 g/mol; and a melting point of from 80 °C to 130 °C. In embodiments, the curable composition may comprise less than 1 wt. %, such as from 0 wt. % to 1 wt. %, from 0 wt. % to 0.1 wt. %, from 0 wt. % to 0.01 wt. %, or any subset thereof of the hot melt processable polymers.

The curable composition may have a viscosity of greater than or equal to 50 centipoise (cp) and less than or equal to 200,000 cp at 25 °C, such as a viscosity of greater than or equal to 100 cp, greater than or equal to 150 cp, greater than or equal to 200 cp, greater than or equal to 250 cp, or greater than or equal to 300 cp and less than or equal to 100,000 cp, less than or equal to 75,000 cp, less than or equal to 50.000 cp, less than or equal to 25,000 cp, less than or equal to 10,000 cp, or less than or equal to 1,000 cp.

The curable composition may comprise from 1 wt. % to 94 wt. % of the free radical polymerizable resin (A), on the basis of the total weight of the curable composition. The curable composition may preferably comprise from 40 wt. % to 80 wt. %, more preferably from 42 wt. % to 75 wt. %, or any subset thereof of the free radical polymerizable resin (A), on the basis of the total weight of the curable composition. In embodiments, the curable composition may comprise from 40 wt. % to 85 wt. %, from 42 wt. % to 80 wt. %, from 42 wt. % to 75 wt. %, from 45 wt. % to 55 wt. %, from 65 wt. % to 75 wt. %, from 80 wt. % to 89.5 wt. %, or any subset thereof of the free radical polymerizable resin (A), on the basis of the total weight of the curable composition. When 'the total weight of the curable composition' is mentioned herein, this is intended to include the total weight of all constituents, including (A) through (D) and any additive.

The curable composition may comprise from 1 wt. % to 40 wt. % preferably 1.0 wt. % to 30 wt. %, more preferably 1.0 wt. % to 20 wt. %, of the polyester (meth)acrylate oligomer, on the basis a total weight of the free radical polymerizable resin and the cationically polymerizable resin. In embodiments, the curable composition may comprise from 1 wt. % to 40 wt. %, from 5 wt.% to 30 wt.%, from 7.5 wt. % to 25 wt. %, from 10 wt. % to 20 wt. %, from 12 wt. % to 18 wt. %, from 13 wt. % to 17 wt. %, or any subset thereof of the polyester (meth)acrylate oligomer, on the basis of the total weight of the free radical polymerizable resin and the cationically polymerizable resin. When 'the total weight of the free radical polymerizable resin and the cationically polymerizable resin' is mentioned herein, this is intended to include the total weight of constituents (A) and (B) excluding any non-polymerizable constituent, such as the one or more additives mentioned herein.

The curable composition may comprise from 1 wt. % to 90 wt. %, preferably 10 wt. % to 70 wt. %, more preferably 40 wt. % to 65 wt. % of the(meth)acrylate monomer, on the basis of the total weight of the free radical polymerizable resin and the cationically polymerizable resin. In embodiments, the curable composition may comprise from 1 wt. % to 90 wt. %, from 1 wt. % to 80 wt. %, from 2.5 wt. % to 70 wt. %, from 5 wt. % to 65 wt. %, from 10 wt. % to 60 wt. %, from 15 wt. % to 55 wt. %, from 20 wt. % to 50 wt. %, from 25 wt. % to 50 wt. %, from 30 wt. % to 45 wt. %, from 30 wt. % to 40 wt. %, from 40 wt. % to 65 wt. %, or any subset thereof of the (meth)acrylate monomer, on the basis of the total weight on the basis of the total weight of the free radical polymerizable resin and the cationically polymerizable resin.

In an embodiment, the curable composition may comprise from 1 wt. % to 40 wt. %, preferably 2 wt. % to 30 wt. %, more preferably 5 wt. % to 25 wt.%, of the polyester (meth)acrylate oligomer and from 1 wt. % to 80 wt. %, preferably 15 wt. % to 70 wt.%, more preferably 25 wt. % to 65 wt. % of the (meth)acrylate monomer, on the basis of the total weight of the free radical polymerizable resin and the cationically polymerizable resin.

The curable composition may comprise from 5 wt. % to 94 wt. % of the cationically polymerizable resin (B), on the basis of the total weight of the curable composition. In embodiments, the curable composition may preferably comprise from 15 wt. % to 60 wt. %, more preferably from 22 wt. % to 55 wt. %, or any subset thereof of the cationically polymerizable resin (B), on the basis of the total weight of the curable composition. In embodiments, the curable composition may comprise from 5 wt. % to 94 wt. %, from 6 wt. % to 90 wt. %, from 7 wt. % to 80 wt. %, from 8 wt. % to 75 wt. %, from 9 wt. % to 70 wt. %, from 10 wt. % to 69.5 wt. %, from 15 wt. % to 65 wt. %, from 20 wt. % to 60 wt. %, from 25 wt. % to 55 wt. %, from 30 wt. % to 50 wt. %, from 25 wt. % to 35 wt. %, from 45 wt. % to 55 wt. %, or any subset thereof of the cationically polymerizable resin (B), on the basis of the total weight of the curable composition.

The weight ratio of the free radical polymerizable resin (A) to the cationically polymerizable resin (B) may be from 10:1 to 1:10, from 5:1 to 1:5, from 4:1 to 1:4, from 4:1 to 1:1, from 3:1 to 1:3, from 2:1 to 1:2, or any subset thereof.

The curable composition may comprise from 0.1 wt. % to 10 wt. %, preferably from 0.5 wt. % to 7 wt. %, and more preferably from 1 wt. % to 3 wt. %, of the free radical photoinitiator (C), on the basis of the total weight of the curable composition. In embodiments, the curable composition may comprise from 0.1 wt. % to 10 wt. %, from 0.5 wt. % to 8 wt. %, from 1 wt. % to 6 wt. %, from 1 wt. % to 5 wt. %, from 1 wt. % to 4 wt. %, from 1 wt. % to 3 wt. %, from 0.5 wt. % to 6 wt. %, from 0.5 wt. % to 5 wt. %, from 0.5 wt. % to 4 wt. %, from 0.5 wt. % to 3 wt. %, from 0.5 wt. % to 2 wt. %, from 1 wt. % to 4 wt. %, from 2 wt. % to 3 wt. %, or any subset thereof of the free radical photoinitiator, on the basis of the total weight of the curable composition. The concentration of the free radical photoinitiator refers to the concentration of the free radical photoinitiator compound itself and does not include any solvents or co-compounds which are not free radical photoinitiators.

The curable composition may comprise from 0.1 wt. % to 10 wt. %, preferably from 0.5 wt. % to 6 wt. %, more preferably from 1 wt. % to 5 wt. %, of the photoacid generator (D), on the basis of the total weight of the curable composition.

In embodiments, the curable composition may comprise from 0.25 wt. % to 5 wt. %, from 0.25 wt. % to 4 wt. %, from 1 wt. % to 5 wt. %, from 2 wt. % to 5 wt. %, from 0.5 wt. % to 4 wt. %, from 1 wt. % to 3.5 wt. %, or any subset thereof of the photoacid generator (D), on the basis of the total weight of the curable composition. The concentration of the photoacid generator refers to the concentration of the photoacid generator compound itself and does not include any solvents or co-compounds which are not photoacid generators.

The curable composition may comprise, based on the total weight of the curable composition:

from 1 wt. % to 94 wt. %, preferably 40 wt. % to 75 wt. %, more preferably 42 wt. % to 72.5 wt. % of the free radical polymerizable resin;
from 5 wt. % to 94 wt. %, preferably 20 wt. % to 55 wt. %, more preferably 22 wt. % to 52.5 wt. % of the cationically polymerizable resin;
from 0.5 wt. % to 8 wt. %, preferably 1 wt. % to 7 wt. %, more preferably 2 wt. % to 4 wt. % of the free radical photoinitiator;
from 0.5 wt. % to 10 wt. %, preferably from 2 wt. % to 7 wt. %, more preferably from 2.5 wt. % to 5 wt. % of the photoacid generator.

The curable composition may comprise at least 80 wt. %, such as at least 90 wt. %, at least 95 wt. %, at least 99 wt. %, or even at least 99.9 wt. % of the total weight of (A) the free radical polymerizable resin; (B) the cationically polymerizable resin; (C) the free radical photoinitiator; and (D) the photoacid generator; on the basis of the total weight of the curable composition. The curable composition may comprise, consist essentially of, or consist of (A) the free radical polymerizable resin; (B) the cationically polymerizable resin; (C) the free radical photoinitiator; and (D) the photoacid generator.

A method of forming a cured product may include exposing the curable composition to an actinic light source. The free radical photoinitiator may be sensitive to radiation within a first wavelength range. In embodiments, the free radical photoinitiator and the photoacid generator may be sensitive to radiation from the actinic light source.

In embodiments, such as when the photoacid generator is an iodonium salt, the curable composition may be cured by exposing the curable composition to actinic radiation within the first wavelength range, thereby producing a dual-cured composition. In such embodiments, the actinic radiation within the first wavelength range may activate both the free radical photoinitiator and the photoacid generator. If the first light source is long wavelength (outside the direct absorbance of the photoacid generator as described above), an iodonium salt may be activated through "redox sensitization" of the iodonium salt by the radicals produced from the radical photoinitiator. Generally, it is believed sulfonium salts are not as useful in such a system, because sulfonium salts are weaker oxidizing agents than iodonium salts. In embodiments, the composition may be cured in one step by a short wavelength light source using a free radical photoinitiator and a photoacid generator, such as a sulfonium or iodonium salt photoacid generator. In these single step embodiments, the short wavelength light may activate both the radical and cationic photoinitiators, regardless of whether the cationic initiator is a sulfonium or iodonium salt.

In some embodiments, the curable composition may be cured by exposing the curable composition to actinic radiation within the first wavelength range and actinic radiation within the second wavelength range, thereby producing a dual-cured composition. In embodiments, the free radical photoinitiator and the photoacid generator may be sensitive to radiation from an actinic light source.

The curable composition may be exposed to the actinic radiation within the first wavelength range., wherein the actinic radiation may have a wavelength range of from 200 nm to 550 nm.

In some embodiments, the curable composition may be partially cured, such as by exposure to the actinic radiation within a first wavelength range, thereby forming a partially-cured product.

The curable composition may be cured through exposure to the actinic radiation within a first wavelength range, and the actinic radiation within the second wavelength range, thereby forming a radically and cationically-cured composition. The radically and cationically-cured composition may be referred to as a dual-cured composition, a cured composition, or both.

In embodiments, the actinic light source may include actinic radiation within the first wavelength range and within the second wavelength range. Generally, the (C) free radical photoinitiator and the (D) photoacid generator may be selected such that the first wavelength range and the second wavelength range may be simultaneously activated using a single actinic light source. In some embodiments, two or more actinic light sources may be used to activate the (C) free radical photoinitiator and/or the (D) photoacid generator.

In some embodiments, the method may further comprise exposing the curable composition, or the partially-cured product to a second actinic light source.

The curable composition may be cured through exposure to the actinic radiation within a first wavelength range, the actinic radiation within the second wavelength range, and a thermal bump, thereby forming a post-cured product.

The curable composition may be exposed to the actinic radiation with the first wavelength range, the second

wavelength range, or both, at room temperature, such as from 20 °C to 30 °C.

The dual-cured composition may be further exposed to temperature of at least 40 °C, such as from 40 °C to 200 °C, from 120 °C to 150 °C, or from 60 °C to 85 °C for a time of at least 0.1 hours, at least 1 hour, or at least 2 hours, thereby producing a post-cured product.

The cured product may be a 3D-printed article, coating, adhesive, sealant, printing plate, photoresist, or composite matrix.

MEASUREMENT METHODS

Tensile Tests

Tensile modulus, tensile strength, and tensile elongation are measured according to ASTM D882. Toughness is calculated by determining the area underneath the stress-strain curve.

Viscosity

Viscosity is measured using a Brookfield DV-III+ viscometer with SC-27 spindle at room temperature or 60 °C (if viscosity is sufficiently high that the viscometer will not operate at room temperature). Each sample is measured at a certain number of revolutions per minute (rpm) needed to achieve 50% torque range. Viscosity is measured in centipoise (cP) after temperature and sample stabilization are achieved (typically after 10 minutes).

ASPECTS

The invention may be as defined in any one of the following Aspects.

Aspect 1. A curable composition may comprise:

(A) a free radical polymerizable resin comprising a polyester (meth)acrylate oligomer, and a (meth)acrylate monomer;

(B) a cationically polymerizable resin;

(C) a free radical photoinitiator; and

(D) a photoacid generator; wherein the polyester (meth)acrylate oligomer has a glass transition temperature (Tg) of less than 25 °C.

Aspect 2. A curable composition according to Aspect 1, wherein the polyester (meth)acrylate oligomer is chosen from a structure according to formula (I):

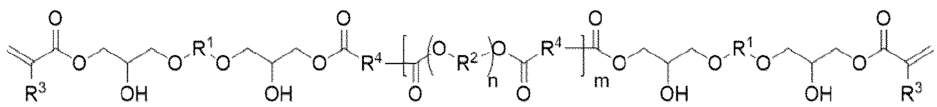

(I)

wherein:

$R^1$ is a divalent ($C_3$-$C_{48}$)hydrocarbon group;
$R^2$ is a divalent ($C_2$-$C_{48}$)hydrocarbon group;
$R^3$ is chosen from -H, a ($C_1$-$C_5$)hydrocarbyl, or combinations thereof;
$R^4$ is a divalent $C_1$-$C_{48}$ aliphatic hydrocarbon group;
n is an integer greater than or equal to 1 and less than or equal to 500; and m is an integer greater than or equal to 1 and less than or equal to 10.

Aspect 3. A curable composition according to Aspect 2, wherein:

$R^1$ is chosen from a butylene, a structure according to formula (II), formula (III), formula (IV), formula (V), formula (VI), or combinations thereof:

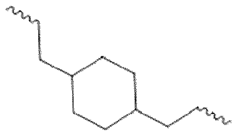

(II);

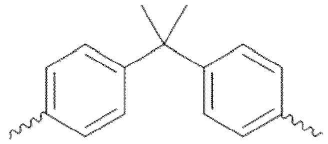

(III);

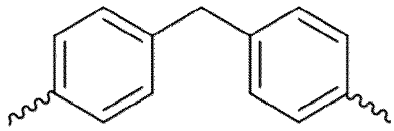

(IV);

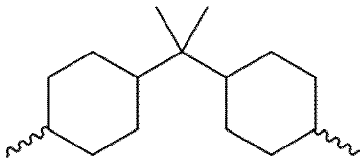

(V);

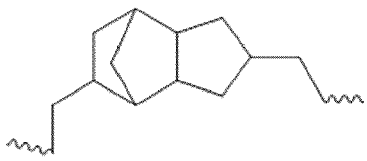

(VI).

$R^2$ is chosen from ethylene, a propylene, a butylene, a pentylene, an hexylene, a residue of a dimerized fatty acid, or combinations thereof; and

$R^3$ is chosen from -H, methyl, or combinations thereof.

Aspect 4. A curable composition according to Aspect 2 or Aspect 3, wherein $R^4$ is chosen from o-phthaloyl, m-phthaloyl, pyromellitoyl, benzophenone derivatives, thioxanthone derivatives, a residue of 3,3',4,4'-benzophenone tetracarboxylic dianhydride, or combinations thereof.

Aspect 5. A curable composition according to any one of Aspects 2 to 4, wherein $R^1$ is $-(CH_2)_4-$, $R^2$ is $-CH_2CH(CH_3)-$, $R^3$ is $-CH_3$, and $R^4$ is $-(CH_2)_2-$ or $-(CH)_2-$.

Aspect 6. A curable composition according to any one of Aspects 2 to 5, wherein the polyester (meth)acrylate oligomer has a number average molecular weight (Mn) of greater than or equal to 4,000 grams per mole (g/mol) and less than or equal to 150,000 g/mol.

Aspect 7. A curable composition according to any one of Aspects 1 to 6, wherein the polyester (meth)acrylate oligomer comprises a hydroxyl group.

Aspect 8. A curable composition according to any one of Aspects 1 to 7, wherein the polyester (meth)acrylate oligomer has a polydispersity index (PDI) of from 1.5 to 4.5.

Aspect 9. A curable composition according to any one of Aspects 1 to 8, wherein greater than or equal to 1 wt.% and less than or equal to 50 wt.%,of the polyester (meth)acrylate oligomer has a number average molecular weight of from 4,000 grams per mole (g/mol) to 150,000 g/mol.

Aspect 10. A curable composition according to any one of Aspects 1 to 9, wherein the polyester (meth)acrylate oligomer comprises a residue of a polyhydric alcohol having a Tg of less than or equal to -15 °C.

Aspect 11. A curable composition according to any one of Aspects 1 to 10, wherein the polyester (meth)acrylate oligomer comprises residues of 4-methylhexahydrophthalic acid, maleic acid, fumaric acid, adipic acid, succinic acid, malonic acid, benzophenone tetracarboxylic acid, glutaric acid, cyclohexane dicarboxylic acids, dihydrophthalic acid, cyclobutane-1,2,3,4-tetracarboxylic acid, pyromellitic acid, or combinations thereof.

Aspect 12. A curable composition according to any one of Aspects 1 to 11, wherein the polyester (meth)acrylate oligomer does not comprise residues of terephthalic acid.

Aspect 13. A curable composition according to any one of Aspects 1 to 12, wherein the curable composition comprises from 5 weight percent (wt.%) to 95 wt.% of the free radical polymerizable resin, based on a total weight of the free radical polymerizable resin and the cationically polymerizable resin.

Aspect 14. A curable composition according to any one of Aspects 1 to 13, wherein the curable composition comprises from 1 weight percent (wt.%) to 40 wt.% of the polyester (meth)acrylate oligomer, based on a total weight of the free radical polymerizable resin and the cationically polymerizable resin.

Aspect 15. A curable composition according to any one of Aspects 1 to 14, wherein the free radical polymerizable resin comprises from 2 weight percent (wt.%) to 60 wt.% of the polyester (meth)acrylate oligomer, based on a total weight of the free radical polymerizable resin.

Aspect 16. A curable composition according to any one of Aspects 1 to 15, wherein the (meth)acrylate monomer

is multifunctional.

Aspect 17. A curable composition according to any one of Aspects 1 to 16, wherein the free radical polymerizable resin does not comprise monofunctional (meth)acrylate monomers.

Aspect 18. A curable composition according to any one of Aspects 1 to 17, wherein the curable composition does not comprise monofunctional (meth)acrylate monomers.

Aspect 19. A curable composition according to any one of Aspects 1 to 18, wherein greater than or equal to 2 wt.% of the (meth)acrylate monomer is multifunctional, based on a total weight of the (meth)acrylate monomer.

Aspect 20. A curable composition according to any one of Aspects 1 to 19, wherein the (meth)acrylate monomer is chosen from methyl (meth)acrylate; ethyl (meth)acrylate; n-propyl (meth)acrylate; n-butyl (meth)acrylate; isobutyl (meth)acrylate; n-hexyl (meth)acrylate; 2-ethylhexyl (meth)acrylate; n-octyl (meth)acrylate; isooctyl (meth)acrylate; n-decyl (meth)acrylate; n-dodecyl (meth)acrylate; tridecyl (meth)acrylate; tetradecyl (meth)acrylate; hexadecyl (meth) acrylate; 2-hydroxyethyl (meth)acrylate; 2- and 3-hydroxypropyl (meth)acrylate; 2-methoxyethyl (meth)acrylate; 2-ethoxyethyl (meth)acrylate; 2- and 3-ethoxypropyl (meth)acrylate; tetrahydrofurfuryl (meth)acrylate; alkoxylated tetrahydrofurfuryl (meth)acrylate; 2-(2-ethoxyethoxy)ethyl (meth)acrylate; cyclohexyl (meth)acrylate; glycidyl (meth)acrylate; isodecyl (meth)acrylate; lauryl (meth)acrylate; 2-phenoxyethyl (meth)acrylate; alkoxylated phenol (meth)acrylates; alkoxylated nonylphenol (meth)acrylates; cyclic trimethylolpropane formal (meth)acrylate; isobornyl (meth)acrylate; tricyclodecanemethanol (meth)acrylate; tert-butylcyclohexanol (meth)acrylate; trimethylcyclohexanol (meth)acrylate; diethylene glycol monomethyl ether (meth)acrylate; diethylene glycol monoethyl ether (meth)acrylate; diethylene glycol monobutyl ether (meth)acrylate; triethylene glycol monoethyl ether (meth)acrylate; ethoxylated lauryl (meth)acrylate; methoxy polyethylene glycol (meth)acrylates; hydroxyl ethyl-butyl urethane (meth)acrylates; 3-(2-hydroxyalkyl)oxazolidinone (meth)acrylates; and combinations thereof.

Aspect 21. A curable composition according to any one of Aspects 1 to 20, wherein the curable composition comprises from 1 weight percent (wt.%) to 80 wt.% of the (meth)acrylate monomer, based on a total weight of the free radical polymerizable resin and the cationically polymerizable resin.

Aspect 22. A curable composition according to any one of Aspects 1 to 21, wherein the free radical polymerizable resin comprises from 5 weight percent (wt.%) to 98 wt.% of the (meth)acrylate monomer, based on a total weight of the free radical polymerizable resin.

Aspect 23. A curable composition according to any one of Aspects 1 to 22, wherein the curable composition comprises from 1 weight percent (wt.%) to 94 wt.% of the free radical polymerizable resin, based on a total weight of the curable composition.

Aspect 24. A curable composition according to any one of Aspects 1 to 23, wherein the cationically polymerizable resin is a compound selected from the group consisting of bisphenol A diglycidyl ether, bisphenol F diglycidyl ether, bisphenol S diglycidyl ether, brominated bisphenol A diglycidyl ether, brominated bisphenol F diglycidyl ether, brominated bisphenol S diglycidyl ether, epoxy novolac resins, hydrogenated bisphenol A diglycidyl ether, hydrogenated bisphenol F diglycidyl ether, hydrogenated bisphenol S diglycidyl ether, 3,4-epoxycyclohexylmethyl-3',4'-epoxycyclohexanecarboxylate, 2-(3,4-epoxycyclohexyl-5,5-spiro-3,4-epoxy)-cyclohexane-1,4-dioxane, bis(3,4-epoxycyclohexylmethyl)adipate, vinylcyclohexene oxide, 4-vinylepoxycyclohexane, vinylcyclohexene dioxide, limonene oxide, limonene dioxide, bis(3,4-epoxy-6-methylcyclohexylmethyl)adipate, 3,4-epoxy-6-methylcyclohexyl-3',4'-epoxy-6'-methylcyclohexanecarboxylate, ε-caprolactone-modified 3,4-epoxycyclohexylmethyl-3',4'-epoxycyclohexane carboxylates, trimethylcaprolactone-modified 3,4-epoxycyclohexylmethyl-3',4'-epoxycyclohexane carboxylates, β-methyl-δ-valerolactone-modified 3,4-epoxycyclohexcylmethyl-3',4'-epoxycyclohexane carboxylates, methylenebis(3,4-epoxycyclohexane), bicyclohexyl-3,3'-epoxide, bis(3,4-epoxycyclohexyl) with a linkage of -O-, -S-, -SO-, $-SO_2-$, $-C(CH_3)_2-$, $-CBr_2-$, $-C(CBr_3)_2-$, $-C(CF_3)_2-$, $-C(CCl_3)_2-$, or $-CH(C_6H_5)-$, dicyclopentadiene diepoxide, di(3,4-epoxycyclohexylmethyl) ether of ethylene glycol, ethylenebis(3,4-epoxycyclohexanecarboxylate), epoxyhexahydrodioctylphthalate, epoxyhexahydro-di-2-ethylhexyl phthalate, 1,4-butanediol diglycidyl ether, 1,6-hexanediol diglycidyl ether, neopentylglycol diglycidyl ether, glycerol triglycidyl ether, trimethylolpropane triglycidyl ether, polyethylene glycol diglycidyl ether, polypropylene glycol diglycidyl ether, polyglycidyl ethers of polyether polyol obtained by the addition of one or more alkylene oxides to aliphatic polyhydric alcohols such as ethylene glycol, propylene glycol, and glycerol, diglycidyl esters of aliphatic long-chain dibasic acids, monoglycidyl ethers of aliphatic higher alcohols, monoglycidyl ethers of phenol, cresol, butyl phenol, or polyether alcohols obtained by the addition of alkylene oxide to these compounds, glycidyl esters of higher fatty acids, epoxidated soybean oil, epoxybutylstearic acid, epoxyoctylstearic acid, epoxidated linseed oil, epoxidated polybutadiene, 1,4-bis[(3-ethyl-3-oxetanylmethoxy)methyl]benzene, 3-ethyl-3-hydroxymethyloxetane, 3-ethyl-3-(3-hydroxypropyl)oxymethyloxetane, 3-ethyl-3-(4-hydroxybutyl)oxymethyloxetane, 3-ethyl-3-(5-hydroxypentyl)oxymethyloxetane, 3-ethyl-3-phenoxymethyloxetane, bis((1-ethyl(3-oxetanyl))methyl)ether, 3-ethyl-3-((2-ethylhexyloxy)methyl)oxetane, 3-ethyl-((triethoxysilylpropoxymethyl)oxetane, 3-(meth)-allyloxymethyl-3-ethyloxetane, (3-ethyl-3-oxetanylmethoxy)methyl benzene, 4-fluoro-[1-(3-ethyl-3-oxetanylmethoxy)methyl]benzene, 4-methoxy-[1-(3-ethyl-3-oxetanylmethoxy)methyl]-benzene, [1-(3-ethyl-3-oxetanylmethoxy)ethyl]phenyl ether, isobutoxymethyl(3-ethyl-3-oxetanylmethyl)ether, 2-ethylhexyl(3-ethyl-3-oxetanylmethyl)ether, ethyldiethylene glycol(3-ethyl-3-oxetanylmethyl)ether, dicyclopentadiene (3-ethyl-3-oxetanylmethyl)ether,

dicyclopentenyloxyethyl(3-ethyl-3-oxetanylmethyl)ether, dicyclopentenyl(3-ethyl-3-oxetanylmethyl)ether, tetrahydrofurfuryl(3-ethyl-3-oxetanylmethyl)ether, 2-hydroxyethyl(3-ethyl-3-oxetanylmethyl)ether, 2-hydroxypropyl(3-ethyl-3-oxetanylmethyl)ether, and any combination thereof.

Aspect 25. A curable composition according to any one of Aspects 1 to 24, wherein the cationically polymerizable resin comprises a structure according to formula (VII), formula (VIII), formula (IX), or combination thereof:

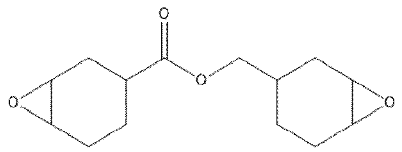
(VII);

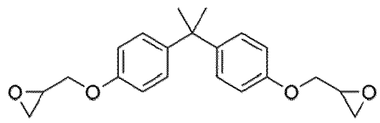
(VIII);

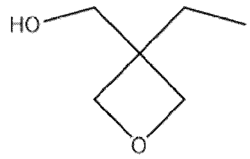
(IX).

Aspect 26. A curable composition according to any one of Aspects 1 to 25, wherein the curable composition comprises from 5 weight percent (wt.%) to 95 wt.% of the cationically polymerizable resin, based on a total weight of the free radical polymerizable resin and the cationically polymerizable resin.

Aspect 27. A curable composition according to any one of Aspects 1 to 26, wherein the cationically polymerizable resin further comprises one or more vinyl ether-functional monomers.

Aspect 28. A curable composition according to any one of Aspects 1 to 27, wherein the free radical photoinitiator comprises a Norrish Type 1 photoinitiator.

Aspect 29. A curable composition according to any one of Aspects 1 to 28, wherein the curable composition comprises from 0.1 weight percent (wt.%) to 10 wt.% of the free radical photoinitiator, based on a total weight of the curable composition.

Aspect 30. A curable composition according to any one of Aspects 1 to 29, wherein the free radical photoinitiator is sensitive to radiation within a first wavelength range.

Aspect 31. A curable composition according to Aspect 30, wherein the first wavelength range is of from 200 nm to 550 nm.

Aspect 32. A curable composition according to any one of Aspects 1 to 31, wherein the photoacid generator comprises a sulfonium compound.

Aspect 33. A curable composition according to any one of Aspects 1 to 32, wherein the photoacid generator comprises a structure according to formula (X), formula (XI), or both:

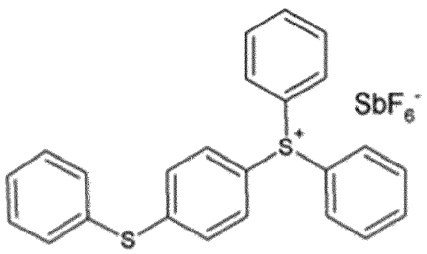
(X)

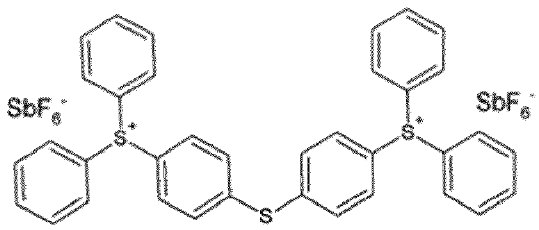
(XI)

Aspect 34. A curable composition according to any one of Aspects 1 to 33, wherein the photoacid generator is sensitive to radiation within a second wavelength range.

Aspect 35. A curable composition according to any one of Aspects 1 to 34, wherein at least a portion of the first wavelength range overlaps with at least a portion of the second wavelength range.

Aspect 36. A curable composition according to any one of Aspects 1 to 35, wherein the curable composition comprises from 0.1 weight percent (wt.%) to 10 wt.% of the photoacid generator, based on a total weight of the curable composition.

Aspect 37. A curable composition according to any one of Aspects 1 to 36, wherein the curable composition further comprises an antioxidant, an ultraviolet absorber, a radical scavenger, a photostabilizer, a foam inhibitor, a flow or

leveling agent, colorants, pigments, a dispersant (wetting agent), a slip additive, a filler, a thixotropic agent, a matting agent, an accelerator, an adhesion promoter, a tackifier, a thermoplastic, or combinations thereof.

Aspect 38. A curable composition according to any one of Aspects 1 to 37, wherein the curable composition comprises from 0 weight percent (wt.%) to 5 wt.% of a filler, based on a total weight of the curable composition.

Aspect 39. A curable composition according to any one of Aspects 1 to 38, wherein the curable composition comprises from 0 weight percent (wt.%) to 5 wt.% of an antioxidant, based on a total weight of the curable composition.

Aspect 40. A curable composition according to any one of Aspects 1 to 39, wherein the curable composition comprises from 0 weight percent (wt.%) to 2 wt.% of a radical scavenger, based on a total weight of the curable composition.

Aspect 41. A curable composition according to any one of Aspects 1 to 40, wherein the curable composition does not comprise a chain transfer agent, excluding any pendant groups on a main chain of the polyester (meth)acrylate oligomer that may at least partially act as a chain transfer agent.

Aspect 42. A curable composition according to any one of Aspects 1 to 41, wherein the curable composition does not comprise impact-modifying particles.

Aspect 43. A curable composition according to any one of Aspects 1 to 42, wherein the curable composition has a viscosity of from 50 centipoise (cp) to 200,000 cp at 25 °C.

Aspect 44. A cured product formed by curing the curable composition of any one of Aspects 1 to 43,

Aspect 45. A method of forming a cured product, the method comprising exposing the curable composition of any one of Aspects 1 to 43 to an actinic light source.

Aspect 46. A method according to Aspect 45, wherein both the free radical photoinitiator and the photoacid generator are sensitive to radiation from the actinic light source.

Aspect 47. A method according to either Aspect 45 or 46, wherein the cured product is a 3D-printed article, coating, adhesive, sealant, printing plate, photoresist, or composite matrix

EXAMPLES

The following examples are provided to illustrate embodiments described in this disclosure and are not intended to limit the scope of this disclosure or its appended claims.

Example 1

In Example 1, a series of curable compositions were prepared using the compounds listed in Table 1.

Table 1

| **Material** | **Structure/Description** | **Supplier** |
|---|---|---|
| SR454 | monomer, Ethoxylated (3) Trimethylolpropane Triacrylate | Sartomer Americas |
| SR606A | monomer, difunctional esterdiol diacrylate | Sartomer Americas |
| NTX14920 | Polyester (meth)acrylate oligomer according to formula (I), where $R^1$ = a structure according to formula (III), $R^2$ = $-CH_2CH_2CH_2$, $R^3$ = methyl, $R^4$ = $C_2H_4$, n = 45, and m ~1.5, $M_n$ =5,600 g/mol, and $T_g$ ~ -2 °C. | Sartomer Americas |
| NTX14921 | Polyester (meth)acrylate oligomer according to formula (I), where $R^1$ = a structure according to formula (III), $R^2$ = $-CH_2CH_2CH_2$, $R^3$ = methyl, $R^4$ = $C_2H_2$, n = 45, and m ~1.5, $M_n$ = 5,600 g/mol, and $T_g$ ~ 0 °C. | Sartomer Americas |
| UviCure S105 | Epoxide, 7-oxabicyclo[4.1.0]hept-3-ylmethyl 7-oxabicyclo[4.1. 0]heptane-3-carboxylate | Sartomer Americas |
| UviCure S130 | Oxetane, 3-Ethyloxetane-3-methanol | Sartomer Americas |
| DER331 (BPADGE) | Liquid epoxy resin | Dow Chemical |
| Speedcure™ BKL | Free radical photoinitiator, 2,2-dimethoxy-1,2-phenylacetophenone | Sartomer Americas |

(continued)

| Material | Structure/Description | Supplier |
|---|---|---|
| Speedcure™ 976 | Photoacid generator, (Sulfanediyldibenzene-4,1-diyl)bis(diphenylsulfonium) bis(hexafluoroantimonate) in propylene carbonate | Sartomer Americas |
| UVDJ107 | Black pigment | Sun Chemical |

A base formulation was prepared according to Table 2.

Table 2

| Material | Amount (wt.%) |
|---|---|
| SR454 | 35% |
| SR606A | 15% |
| UviCure S105 | 21% |
| UviCureS130 | 9% |
| DER331 | 20% |

Speedcure™ BKL, Speedcure™ 976, and UVDJ107 were added to the base formulation in an amount of 2 wt.%, 3 wt.%, and 0.1 wt.% respectively, relative to the total weight of the base formulation (e.g. 2 g of Speedcure™ BKL, 3 g of Speedcure™ 976, and 0.1 g added to 100 g of the base formulation).

A polyester (meth)acrylate oligomer (NTX14920 or NTX14921) was included in a series of formulations of the curable compositions according to Table 3, where the amount added (+wt%) corresponds to an amount of the polyester (meth)acrylate oligomer added relative to the total weight of the base formulation prior to the addition of Speedcure™ BKL, Speedcure™ 976, and UVDJ107. The viscosity of the curable compositions is also reported in Table 3, as measured according to the Test Methods described herein. NTX14920 was synthesized as follows: A 500 mL resin kettle equipped with a mechanical stirrer, gas inlet, and addition funnel was charged with 0.1 g BHT, 0.2 g MEHQ, 0.1 g triphenylphosphite, and 464.55 g poly(1,3-propane diol) and heated from ambient temperature to 100 °C under $N_2$ sparge. After the temperature reached 55-65 °C, 34.43 g succinic anhydride and 0.3 g basic chromium acetate were added. The reaction temperature was adjusted to 110-125 °C until all the anhydride was consumed as determined by FT-IR

(preferably based on the disappearance of the peak 1820-1870 $cm^{-1}$). Once the anhydride was consumed, the gas sparge was switched to dry air and the mixture was aerated for 10 min. 14.50 g 1,4-budutanediol diglycidyl ether was added, followed by 12.40 g acrylic acid and the temperature was increased. The mixture was allowed to react until acid value (AV) and epoxy value (EV) were both < 3 mg KOH/g by ASTM D1639 and D1652, respectively. The product was discharged to a glass jar where it was allowed to cool to room temperature and was obtained as a viscous liquid. NTX14921 was synthesized using the same method substituting maleic anhydride for an equimolar quantity of succinic anhydride used in the synthesis of NTX14920.

Table 3

| Example | Polyester (meth)acrylate oligomer | Amount of polyester (meth)acrylate oligomer (+wt.%) | Viscosity (cP) |
|---|---|---|---|
| Ex. 1A | None | - | 130 |
| Ex. 1-1 | NTX14920 | 5 wt.% | 210 |
| Ex. 1-2 | NTX14920 | 10 wt.% | 330 |
| Ex. 1-3 | NTX14920 | 20 wt.% | 700 |
| Ex. 1-4 | NTX14921 | 5 wt.% | - |
| Ex. 1-5 | NTX14921 | 10 wt.% | 450 |
| Ex. 1-6 | NTX14921 | 20 wt.% | 870 |

Thin films were printed using the curable compositions of Comparative Example 1A, and Examples 1-1 through 1-6. The thin films were prepared as tensile samples in accordance with ASTM D882-18. The thin films were printed to have dimensions of 0.6 mm x 13 mm x 100 mm (thickness x width x length). The thin films were printed directly onto a glass

plate without support structures. For each tensile bar, a coating of the curable composition was applied to the glass plate using a 5 mils film applicator, then the first layer of the three-dimensional thin film was irradiated using a 355 nm solid state laser that emits a beam with an irradiance of 750 $mW/cm^2$. This beam produced an energy dosage of approximately 75 $mJ/cm^2$ in a cross fill pattern. After curing the first layer, an additional coating of the curable composition was applied on top of the cured first layer using a 10 mils film applicator - creating the second layer 5 mils in thickness and giving the 'thin film' a total thickness of 10 mils. The second layer was irradiated in the same manner as the first, and the process was repeated for a total of six layers, each being 5 mils thick. After the last layer, the cured articles were removed from the glass plate. Four cured articles ("thin films") were printed for all tested compositions. The cured articles were post-cured using an IntelliRay UV flood curing system at 300+ $mW/cm^2$ for 1 minute on each side of the thin film.

The toughness, tensile modulus, tensile strength, tensile elongation, and toughness of Comparative Example 1A and Inventive Examples 1-1, through 1-6 were calculated according to the Test Methods described herein. The toughness is reported in Table 4. FIG. 1 depicts the calculated tensile modulus (MPa) of Comparative Example 1A and Inventive Examples 1-1 through 1-6. FIG. 2 depicts the calculated tensile strength (MPa) of Comparative Example 1A and Inventive Examples 1-1 through 1-6. FIG. 3 depicts the calculated tensile elongation of Comparative Example 1A and Inventive Examples 1-1 through 1-6. FIG. 4 depicts the calculated tensile strength (y-axis) and the calculated elongation (x-axis) of Comparative Example 1A 402 and Example 1-1 404, Example 1-2 406, Example 1-3 408, Example 1-4 410, Example 1-5 412, and Example 1-6 414.

Table 4

| Example | Polyester (meth)acrylate oligomer | Concentration (+0 wt.%) | Toughness ($J/cm^3$) |
|---|---|---|---|
| Ex. 1A | None | 0 | 2.7 ± 0.5 |
| Ex. 1-1 | NTX14920 | 5 | 3.1 ± 1.1 |
| Ex. 1-2 | NTX14920 | 10 | 3.0 ± 1.0 |
| Ex. 1-3 | NTX14921 | 20 | 5.1 ± 2.1 |
| Ex. 1-5 | NTX14921 | 10 | 2.4 ± 0.4 |
| Ex. 1-6 | NTX14920 | 20 | 4.3 ± 0.8 |

As shown in Table 4, the incorporation of polyester (meth)acrylate oligomers into curable compositions including a free radical polymerizable resin and a cationically polymerizable resin results in improved toughness of cured products formed from curing the curable compositions compared to Comparative Example 1A, which did not include a polyester (meth)acrylate oligomer. Further, as shown in FIG. 1, FIG. 2, FIG. 3, and FIG. 4, the curable compositions disclosed herein may be modified to achieve improved toughness and elongation while minimizing a loss of tensile modulus and/or tensile strength. The relative amounts of the polyester (meth)acrylate oligomer and other components of the curable composition may be adjusted to achieve a desired balance between tensile strength and tensile elongation.

## Claims

**1.** A curable composition comprising:

(A) a free radical polymerizable resin comprising:

a polyester (meth)acrylate oligomer; and
a (meth)acrylate monomer;

(B) a cationically polymerizable resin;
(C) a free radical photoinitiator; and
(D) a photoacid generator;
wherein the polyester (meth)acrylate oligomer has a glass transition temperature (Tg) of less than 25 °C.

**2.** The curable composition of claim 1, wherein the polyester (meth)acrylate oligomer is chosen from a structure according to formula (I):

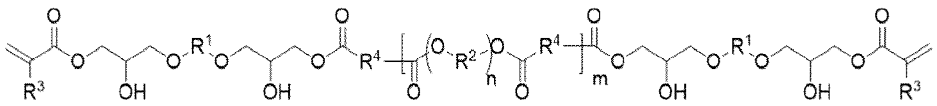
(I)

wherein:

$R^1$ is a divalent ($C_3$-$C_{48}$)hydrocarbon group;
$R^2$ is a divalent ($C_2$-$C_{48}$)hydrocarbon group;
$R^3$ is chosen from -H, a ($C_1$-$C_5$)hydrocarbyl, or combinations thereof;
$R^4$ is a divalent $C_1$-$C_{48}$ aliphatic hydrocarbon group;
n is an integer greater than or equal to 1 and less than or equal to 500; and
m is an integer greater than or equal to 1 and less than or equal to 10.

**3.** The curable composition of claim 2, wherein:

$R^1$ is chosen from a butylene, a structure according to formula (II), formula (III), formula (IV), formula (V), formula (VI), or combinations thereof:

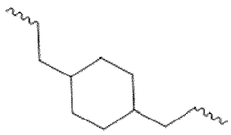
(II);

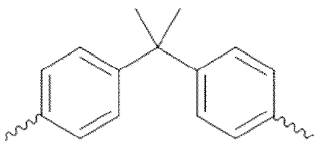
(III);

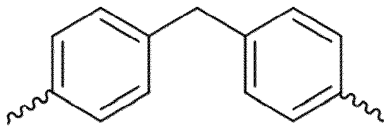
(IV);

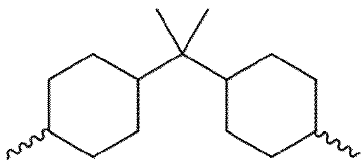
(V);

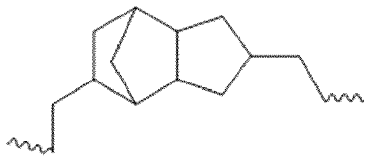
(VI).

$R^2$ is chosen from ethylene, a propylene, a butylene, a pentylene, an hexylene, a residue of a dimerized fatty acid, or combinations thereof; and
$R^3$ is chosen from -H, methyl, or combinations thereof.

**4.** The curable composition of any one of claim 1 to claim 3, wherein the polyester (meth)acrylate oligomer comprises a hydroxyl group.

**5.** The curable composition of any one of claim 1 to claim 4, wherein the polyester (meth)acrylate oligomer does not comprise residues of terephthalic acid.

**6.** The curable composition of any one of claim 1 to claim 5, wherein the curable composition comprises from 5 weight percent (wt.%) to 95 wt.% of the free radical polymerizable resin, based on a total weight of the free radical polymerizable resin and the cationically polymerizable resin.

**7.** The curable composition of any one of claim 1 to claim 6, wherein the curable composition comprises from 1 weight percent (wt.%) to 40 wt.% of the polyester (meth)acrylate oligomer, based on a total weight of the free radical polymerizable resin and the cationically polymerizable resin.

**8.** The curable composition of any one of claim 1 to claim 7, wherein the free radical polymerizable resin comprises from 2 weight percent (wt.%) to 60 wt.% of the polyester (meth)acrylate oligomer, based on a total weight of the free radical polymerizable resin.

**9.** The curable composition of any one of claim 1 to claim 8, wherein the (meth)acrylate monomer is multifunctional.

**10.** The curable composition of any one of claim 1 to claim 9, wherein the curable composition comprises from 1 weight percent (wt.%) to 94 wt.% of the free radical polymerizable resin, based on a total weight of the curable composition.

**11.** The curable composition of any one of claim 1 to claim 10, wherein the curable composition comprises from 5 weight percent (wt.%) to 95 wt.% of the cationically polymerizable resin, based on a total weight of the free radical polymerizable resin and the cationically polymerizable resin.

**12.** The curable composition of any one of claim 1 to claim 11, wherein the curable composition further comprises an antioxidant, an ultraviolet absorber, a radical scavenger, a photostabilizer, a foam inhibitor, a flow or leveling agent, colorants, pigments, a dispersant (wetting agent), a slip additive, a filler, a thixotropic agent, a matting agent, an accelerator, an adhesion promoter, a tackifier, a thermoplastic, or combinations thereof.

**13.** The curable composition of any one of claim 1 to claim 12, wherein the curable composition has a viscosity of from 50 centipoise (cp) to 200,000 cp at 25 °C.

**14.** A cured product formed by curing the curable composition of any one of claim 1 to claim 13.

**15.** A method of forming a cured product, the method comprising exposing the curable composition of any one of claim 1 to claim 14 to an actinic light source.

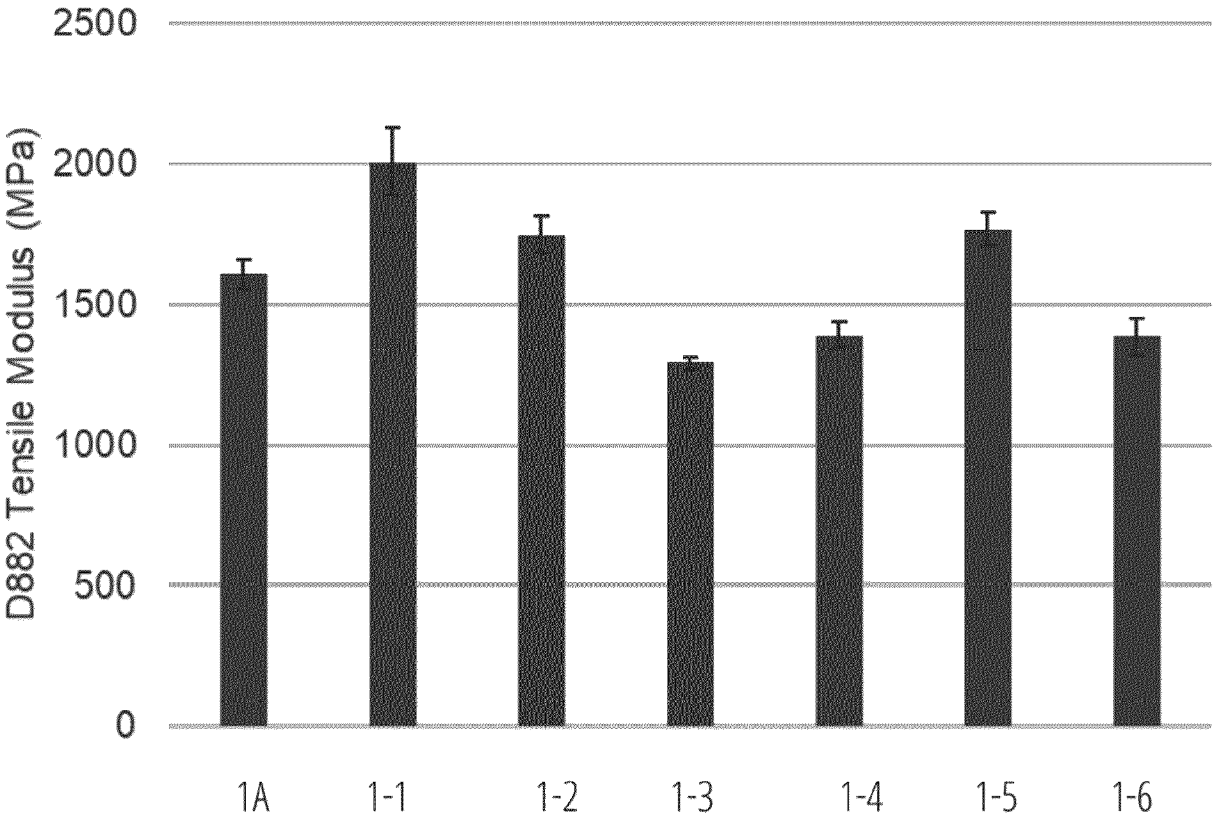

D882 Tensile Modulus (MPa)
2500
2000
1500
1000
500
0
1A
1-1
1-2
1-3
1-4
1-5
1-6


FIG. 1

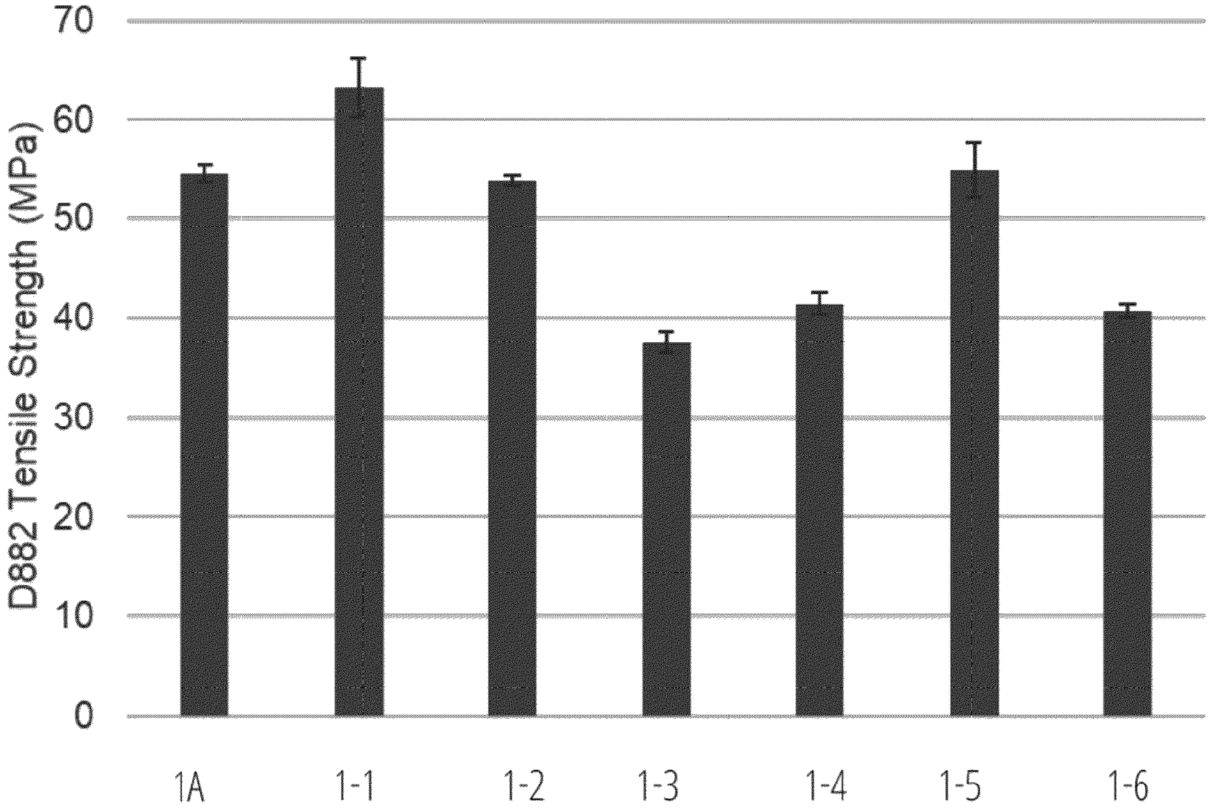
70
60
50
40
30
20
10
0
D882 Tensile Strength (MPa)
1A
1-1
1-2
1-3
1-4
1-5
1-6

FIG. 2

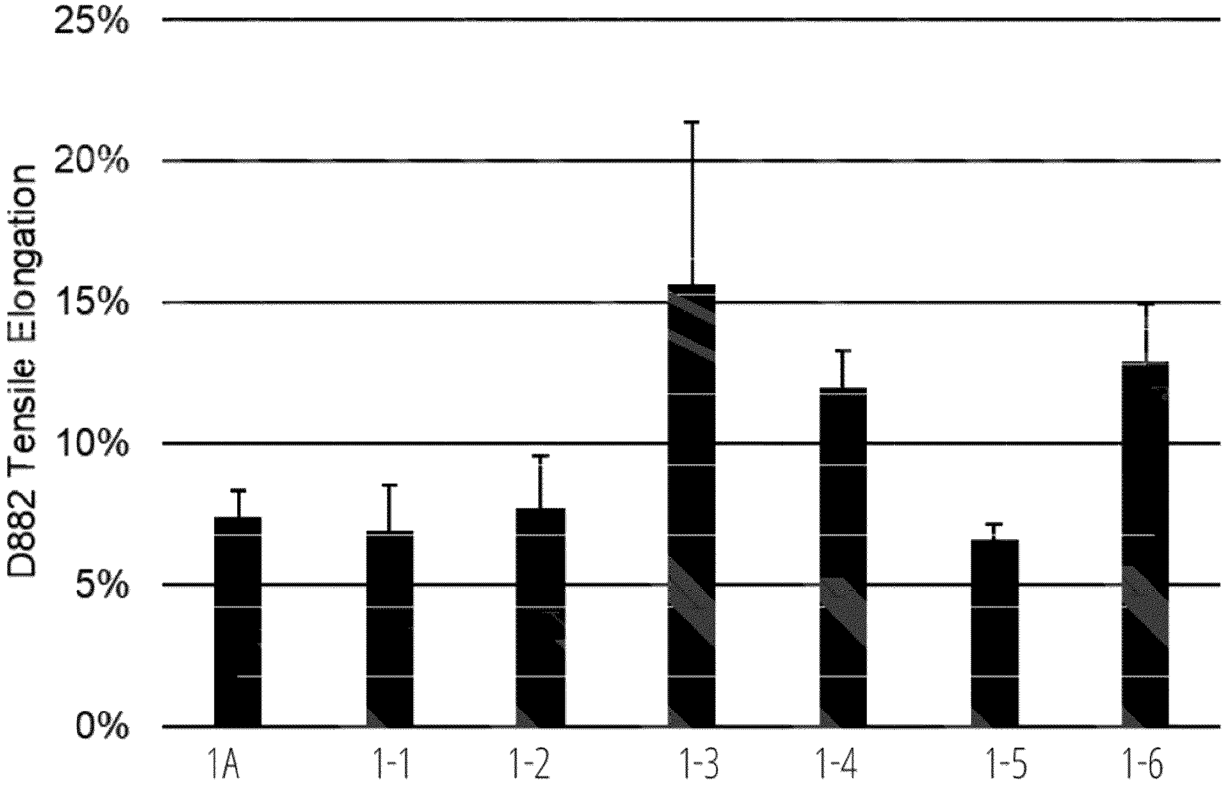


FIG. 3

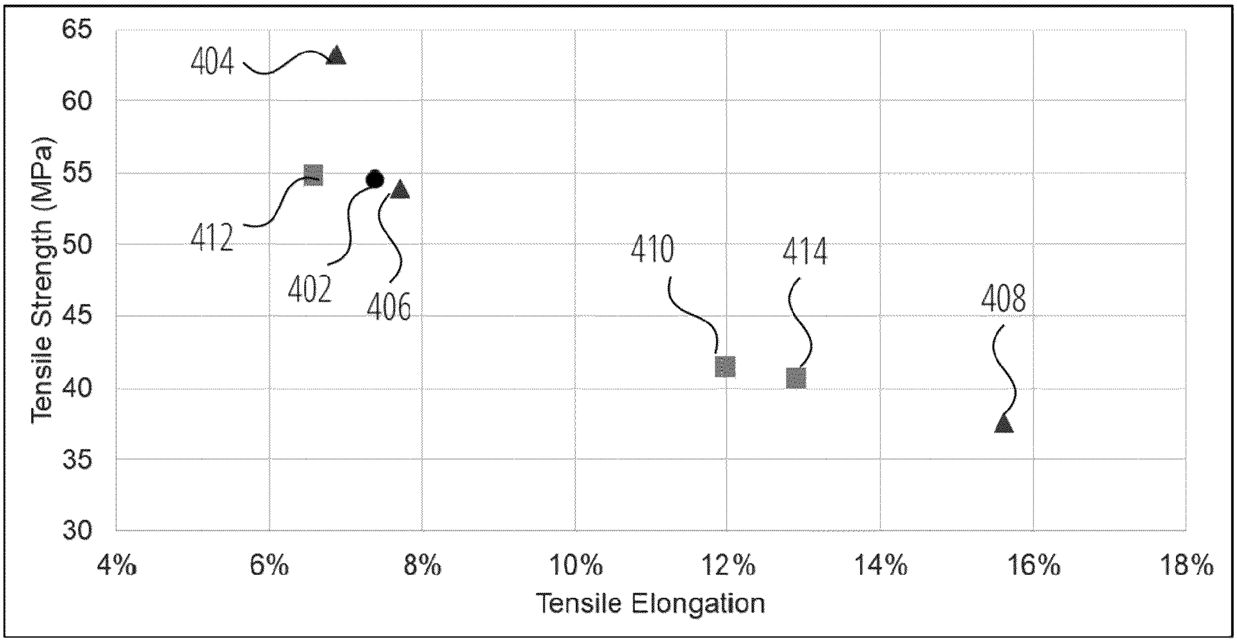
65
60
55
50
45
40
35
30
Tensile Strength (MPa)
4%
6%
8%
10%
12%
14%
16%
18%
Tensile Elongation
404
412
402
406
410
414
408

FIG. 4

Europäisches Patentamt
European Patent Office
Office européen des brevets

# EUROPEAN SEARCH REPORT

Application Number
EP 23 30 7274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/125296 A1 (PERSTORP AB [SE]) 27 June 2019 (2019-06-27) * table 1 * * examples 5,6; table 3 * ----- | 1-15 | INV. C08F290/06 C08F283/10 C08F222/10 C08J5/18 C08L51/08 C09D151/08 |

TECHNICAL FIELDS SEARCHED (IPC)

C08F
C08J
C08L
C09D
B33Y

The present search report has been drawn up for all claims

1

| Place of search | Date of completion of the search | Examiner |
|---|---|---|
| Munich | 3 May 2024 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 30 7274

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2024

| Patent document cited in search report | Publication date | Patent family member(s) | Publication date |
|---|---|---|---|
| WO 2019125296 A1 | 27-06-2019 | CN 111491776 A | 04-08-2020 |
| | | EP 3727797 A1 | 28-10-2020 |
| | | SE 1730346 A1 | 11-06-2019 |
| | | US 2020308426 A1 | 01-10-2020 |
| | | WO 2019125296 A1 | 27-06-2019 |

EPO FORM P0459

For more details about this annex : see Official Journal of the European Patent Office, No. 12/82